(19) Europäisches Patentamt
European Patent Office
Office européen des brevets

(11) EP 3 987 932 A1

(12) EUROPEAN PATENT APPLICATION

(43) Date of publication:
**27.04.2022 Bulletin 2022/17**

(21) Application number: **20203919.4**

(22) Date of filing: **26.10.2020**

(51) International Patent Classification (IPC):
***A01N 43/40*** $^{(2006.01)}$ ***A01P 13/02*** $^{(2006.01)}$
***A01N 33/18*** $^{(2006.01)}$ ***A01N 33/22*** $^{(2006.01)}$
***A01N 35/10*** $^{(2006.01)}$ ***A01N 37/48*** $^{(2006.01)}$
***A01N 43/10*** $^{(2006.01)}$ ***A01N 43/42*** $^{(2006.01)}$
***A01N 43/50*** $^{(2006.01)}$ ***A01N 43/54*** $^{(2006.01)}$
***A01N 43/56*** $^{(2006.01)}$ ***A01N 43/60*** $^{(2006.01)}$
***A01N 43/90*** $^{(2006.01)}$ ***A01N 47/36*** $^{(2006.01)}$
***A01N 47/38*** $^{(2006.01)}$ ***A01N 57/20*** $^{(2006.01)}$

(52) Cooperative Patent Classification (CPC):
(C-Sets available)
**A01P 13/02; A01N 43/40** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Adama Agan Ltd.**
**7710001 Ashdod (IL)**

(72) Inventors:
- **MIRYAMCHIK, Hadas**
  **7015103 Airport City (IL)**
- **YOGEV, Ehud**
  **7015103 Airport City (IL)**
- **CURTIS, Grant**
  **7015103 Airport City (IL)**
- **HUTTENLOCHER, Martin**
  **7015103 Airport City (IL)**

(74) Representative: **Modiano, Gabriella Diana et al**
**Modiano & Partners (DE)**
**Thierschstrasse 11**
**80538 München (DE)**

(54) **HERBICIDAL COMBINATIONS**

(57) The present invention relates to Halauxifen based two-component herbicides comprising, combinations, that comprise, as component **(a)** Halauxifen, and agriculturally acceptable derivatives including salts and esters thereof, and most particularly, Halauxifenmethyl, applied with component **(b)** co-herbicides which are each chosen to be tailored to be particularly useful in combination with **a**) for weed control options in specific crops, weeds and application modalities, be they cereals, oilseed rape, sunflower, soy and perennial crops. The b) co-herbicides which are each chosen from, Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc., chosen for tailored control of unwanted vegetation including *Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza bonariensis*), *Conyza canadensis,Amsinckia intermedia, Calandrinia ciliate, Erodium cicutarium, Malva parviflora, Medicago polymorpha, Poa annua, Panicum capillare, Agropyron repens,* and *Setariafaberi.* The invention has particular utility in reducing each herbicidally active ingredient in the two-component herbicide to below the herbicidally effective amount applied while providing control of undesired vegetation or weed.



Processed by Luminess, 75001 PARIS (FR)

**(Cont. next page)**

(52) Cooperative Patent Classification (CPC): (Cont.)

C-Sets
**A01N 43/40**

## Description

FIELD AND BACKGROUND OF THE INVENTION

The present invention relates to two-component herbicide combinations

BACKGROUND

The control of undesired vegetation is extremely important in order to achieve high crop efficiency. In many cases, while herbicides have an effect against a spectrum of weeds, they do not however fight a certain type of other weeds, which is also present in the crop cultures to be protected. Therefore, there is a strong need for mixing two or more herbicides. In addition, there is a strong and on-going need to reduce herbicide use while not sacrificing weed control efficacy to a disadvantageous degree.

Compounds (I) as detailed below, and agriculturally acceptable salts and esters thereof are described in U.S. Patent 7,314,849 as belonging to a family of compounds with weed control activity.
US2009/0062121 alleges that Compound I is a preferred compound for the control of weeds in various crops. U.S. Patent 8,598,084 states that Compound I is used for the control of weeds and that the methyl ester i.e. the compound of formula (I) controls various weeds.

Although compounds (I) of and especially of formula (I) detailed below,are useful herbicides, combinations of selected herbicides have several advantages over the use of a single herbicide including (i) an increase in the spectrum of weeds controlled or an extension of weed control over a longer period of time, (ii) an improvement in crop safety by using reduced, and preferably, minimum doses of selected herbicides applied in combination rather than a single high doses of one herbicide, (ii) a delay in the appearance of resistant weed species to selected herbicides (Int. J. Agri. Biol., Vol. 6, No. 1, 2004, pages 209-212), and (iv) the speed at which control is achieved.

In addition, the scope of crops which can benefit from herbicidal use of compounds (I), and especially of formula (I) can be broadened with the judicious choice of at least one further coherbicide or herbicides with which compound (I) herbicides can be combined or mixed etc. each selected for its intended use environment, be it crop or weeds occurring in those crops. Perhaps more significantly, the amount of herbicide active ingredients of compounds (I) applied can be reduced below their recommended herbicidally effective amounts and the amounts of the at least one further co-herbicide or herbicide in the combination applied can also be reduced to below recommended herbicidally recommended amounts.

Often a where a herbicide is already known to be useful in a particular crop, the combined use with an additional or co-herbicide can enhance the activity of the known herbicide, to either allow reduction of the amount of herbicide applied for the same effect or to increase the efficiency of weed control of the herbicide without increasing the amount applied.

In some cases, it is the speed at which weed control is achieved for the same crop or unwanted or undesirable vegetation or weed, rather than, or in addition to, the known efficacy of the herbicide.

The activity and selectivity behavior of any specific combination is difficult to predict since the behavior of each single herbicide in the combination is often affected by the other(s) and the activity of the combination may also vary considerably depending on chemical character, plant species, growth stage, and environmental conditions. Mostly, this practice of randomly combining herbicides, results in reduced activity of the herbicides in the combination. It is worth noting that even combinations that are found to enhance the herbicidal efficacy of the individual components can, in certain examples, inadvertently enhance unwanted side-effects, e.g. phytotoxicity, of the individual components against the crops that are intended to be protected. While it is often the case that synergism between two or more herbicides is desirable, where the enhancement of weed control is synergistic the harmful effects can often be unpredictably enhanced too. This can sometimes adversely affect the selectivity of each known component of a synergistic combination.

In the seemingly constant drive to increase herbicidal efficacy to the maximum, the oftenquoted physician's oath to "do no harm" is too often ignored, be that harm to the crops within which weeds occur through lack of selectivity, or to the environment, for example, through the synergy of pollutants or synergistically enhanced unwanted side effects.

Based on the aspects discussed above, there is a need in the art for herbicidal combinations, which provide predictable adequate weed control often comparable to the individual compounds often with significantly reduced amounts of herbicide active ingredients and or application rates, tailored to crop varieties and species of weed. Further, there is a need to provide herbicidal combinations, which provide significantly enhanced weed control with application rates comparable to or less than those of the individual compounds, without simultaneously enhancing unwanted effects.

And thus, the present subject matter relates to Halauxifen based two-component weed control combinations, mixtures, admixtures, kits and the like, that comprise combinations, application-combinations, mixtures, admixtures, compositions, kits etc. hereinafter, generally referred to as combinations, of, as first component **a)** not less than one Compound (I)

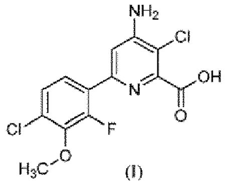

(I)

which is 4-amino-3-chloro-6-(4- chloro-2-fluoro-3-methoxyphenyl)pyridine-2-carboxylic acid, and agriculturally acceptable salts and esters thereof, and most particularly, the ester compound of Formula (I), Methyl 4-amino-3-chloro-6-(4-chloro-2-fluoro-3-methoxyphenyl)2-pyridinecarboxylate and applied with second component **b)** further herbicides which are each chosen to be particularly useful in combination with compounds (I), especially of Formula (I) for weed control options in specific crop environments and application modalities, be they cereals, oilseed rape, sunflower, soy and perennial crops.

Each of the further herbicides of component **b)** are usefully referred to here as co-herbicide. The coherbicides are often usefully chosen to be particularly useful in combination with compounds (I), especially of Formula (I) for weed control options in specific unwanted vegetation or weeds and application modalities against woody plants, broadleaf and grass weeds, and sedges without reference to whether they occur in a specific crop, be they for example, *Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza bonariensis)*, *Conyza canadensis,Amsinckia intermedia, Calandrinia ciliate, Erodium cicutarium, Malva parviflora, Medicago polymorpha, Poa annua, Panicum capillare, Agropyron repens, and Setaria faberi.* among others.

SUMMARY OF THE INVENTION

The present invention concerns two-component herbicidal combinations comprising an herbicidally effective amount of a combination of component **(a),** an herbicidal pyridine carboxylic acid component and component **(b),** a co-herbicide component.

Two-component herbicidal combinations of the invention are typically synergistically herbicidally effective or more particularly allow for the reduction of the amount used of each component and or reduce the time period required to achieve the known herbicidal effect.

The present invention also provides two-component herbicidal combinations comprising an herbicidally effective amount of a combination of component **(a),** an herbicidal pyridine carboxylic acid component and component **(b),** a co-herbicide component wherein the amount of component **(a)** and the amount of component **(b)** when applied together is more effective in treating a plant or soil against fungal infection than when each herbicide at the same amount is applied alone.

The present invention also provides two-component herbicidal combinations comprising an herbicidally effective amount of a combination of component (a), an herbicidal pyridine carboxylic acid component including salts and esters thereof, and component (b), a coherbicide component so as to thereby control undesired vegetation wherein the amount of active ingredient of component (a) applied, is less than the herbicidally effective amount of pyridine carboxylic acid e.g. halauxifen-methyl when halauxifen-methyl is used alone, and/or wherein the amount of each of the co-herbicide active ingredients of component (b) applied is less than the herbicidally effective amount of the co-herbicide active ingredients of component (b) when the co-herbicide active ingredient of component (b) is used alone.

Herbicidal two-component combinations of the invention having particular utility as weed control agents in crops selected from oilseed rape, cereals, sunflowers, soy and orchards, and being markedly effective in controlling *Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza bonariensis*), *Conyza canadensis,Amsinckia intermedia, Calandrinia ciliate, Erodium cicutarium, Malva parviflora, Medicago polymorpha, Poa annua, Panicum capillare, Agropyron repens, and Setaria faberi.*

The present subject matter relates to herbicidally effective weed control two component herbicidal combinations comprising, as herbicidal active ingredients of component **a)** 4amino-3-chloro-6-(4- chloro-2-fluoro-3-methoxyphenyl)pyridine-2-carboxylic acid, and agriculturally acceptable derivatives thereof including salts and esters thereof; and as active components **b),** additional herbicidal active compound or compounds with tailored utility in various crops and against various pests.

The present invention concerns herbicidal combinations comprising an herbicidally effective amount of, as components **a),** at least one first herbicide component selected from the group of a pyridine carboxylic acid of Compound (I)

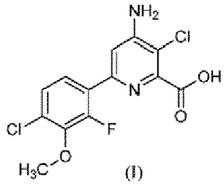

(I)

which is 4-amino-3-chloro-6-(4- chloro-2-fluoro-3-methoxyphenyl)pyridine-2-carboxylic acid, and agriculturally acceptable salts and esters, and combinations thereof, and most particularly, the ester compound of Formula (I), methyl 4-amino-3-chloro-6-(4-chloro-2fluoro-3-methoxyphenyl) pyridine-2-carboxylate, and as components **b),** a second herbicide component selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations thereof.

The two-component herbicidal combinations of the invention are typically synergistically herbicidally effective as herbicides against unwanted vegetation in oilseed rape, cereal, sunflower, soy and orchard crops.

Those combinations which are compositions may also contain agriculturally acceptable adjuvant, carrier, formulation aids, base or acid, pH modifiers, thickeners, surfactants etc.

In some embodiments, the mixtures, compositions and/or methods all included within the combination invention disclosed herein further comprise additive. Additives may include though definitely not limited to carrier, safener, adjuvant, surfactants, pH modifying ingredient or base or acid in non-aqueous systems, as required, formulation aids or combinations thereof. An example of a common class of additive includes alkylene glycols, which have many uses in formulations.

A non-limiting example might include a combination of Halauxifen, Aminopyralid and a base and optionally any of surfactant, carrier, adjuvant etc.

Commonly available safeners which may be usefully employed, individually or in any combination found to be useful, with the inventive combinations may include but are in no way limited to Daimuron (Dymron), Cumyluron , Dimepiperate, Fenclorim, Cloquintocet (Cloquintocet-mexyl), Fenchlorazole-ethyl, Mefenpyr (Mefenpyr-diethyl), Isoxadifen (Isoxadifen-ethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil.

Those skilled in the relevant field of art will immediately be aware of further safeners that may be employed without departing from the scope of the combination invention disclosed here. Combinations of safeners can be employed in the methods, combinations and compositions (all included in the term, combinations), of the combination invention.

An illustrative, non-limiting example of a combination according to the invention which comprises safeners is e.g. a combination of Halauxifen (e.g. Halauxifen-methyl), Clopyralid (salts esters etc.), in combination with any, or all of Cloquintocet (preferably, Cloquintocet mexyl) Mefenpyr (preferably, Mefenpyr-diethyl), Isoxadifen (preferably, Isoxadifen-ethyl)

Another illustrative, non-limiting example of a combination according to the invention which comprises safeners is e.g. a combination of Halauxifen, Aminopyralid, in combination with any, some or all of Cloquintocet, Isoxadifen and Mefenpyr.

A further illustrative, non-limiting example of a combination according to the invention which comprises safeners is e.g. a combination of Halauxifen, Picloram, in combination with any, some, or all of Cloquintocet, Isoxadifen and Mefenpyr.

A further illustrative, non-limiting example of a combination according to the invention which comprises safeners is e.g. a combination of Halauxifen, Quinclorac, in combination with any, some, or all of Cloquintocet, Isoxadifen and Mefenpyr.

Yet a further illustrative, non-limiting example of a combination according to the invention which comprises safeners is e.g. a combination of Halauxifen, Tribenuron, in combination with any, some, or all of Cloquintocet, Isoxadifen and Mefenpyr.

In some embodiments, the combinations of the invention may be employed in combination with with cloquintocet mexyl, either alone or together with other safeners, and adjuvants, additives etc.

In some embodiments, it is a co-herbicide that comprises component **b)** itself that acts as a safener for, as well as enhancing the herbicidal activity of, the pyridine carboxylic acid component **a),** or for that matter as a safener for other co-herbicides comprising component **b).**

The present invention also concerns methods of utilizing a two-component herbicidal combination comprising an herbicidally effective amount of component **a)** at least one first herbicide selected from the group of a pyridine carboxylic acid of Compound (I)

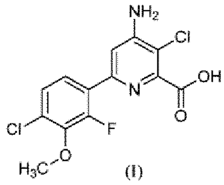

(I)

which is 4-amino-3-chloro-6-(4- chloro-2-fluoro-3-methoxyphenyl)pyridine-2-carboxylic acid, and agriculturally acceptable salts and esters thereof individually or in combination, and most particularly, the ester compound of Formula (I), methyl 4-amino-3-chloro-6-(4-chloro-2fluoro-3-methoxyphenyl) pyridine-2-carboxylate and applied with component **b),** second herbicide selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate and any and all combinations etc. thereof for herbicidally effective weed control.

In some embodiments Compound (I) of component **a)** is comprised of 4-amino-3-chloro-6-(4-chloro-2-fluoro-3-methoxyphenyl)pyridine-2-carboxylic acid together with one or several and varied agriculturally acceptable derivatives thereof as detailed above.

In some embodiments the agriculturally acceptable derivatives of compound (I) include those that relate to acid derivatives of the carboxylic acid functionality at the 2-position of the pyridine, which (i) does not substantially negatively affect the herbicidal activity of the active ingredient, and (ii) is or can be hydrolyzed, oxidized or metabolized in plants or soil to herbicidally active compound (I).

In some preferred embodiments the Compound (I) component **a),** comprises the methyl ester compound of Formula (I), methyl 4-amino-3-chloro-6-(4-chloro-2-fluoro-3methoxyphenyl)pyridine-2-carboxylate.

In some embodiments the specific derivatives are chosen to facilitate combining a compound (I) component **a)** in the same formulation or composition as the further component **b)** coherbicides chosen to be useful for the particular crop, to overcome formulation issues of solubility, sensitivity to acid, base or pH; wettability chemical incompatibility and the like.

In some embodiments component **b)** is any of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof.

In some embodiments, the crops are cereals and component **b)** is any of Thiencarbazonemethyl (Thiencarbazone); Pyroxsulam; Bifenox; Diflufenican; Pinoxaden (including Pinoxaden acid and enolate form thereof); and any and all combinations etc. thereof.

In some embodiments, the crops are Oilseed Rape (OSR), and component **b)** is any of, Pendimethalin; Quinmerac; DMA-P (Dimethenamid-P); Metazachlor; and any and all combinations etc. thereof.

In some embodiments, the crops are Sunflower, and component **b)** is any of, Aclonifen; Imazamox; Quizalofop; and any and all combinations etc. thereof.

In some embodiments, the crops are Soy, and component **b)** is any of, Aminopyralid, pendimethalin; and any and all combinations etc. thereof.

The present subject matter also relates to methods of weed control or control of undesirable (includes undesired) vegetation by applying herbicidally effective amounts of the inventive two-component herbicidal combinations to the weeds or undesirable vegetation or the locus thereof.

In some embodiments the weed control or control of undesirable vegetation is selective control.

In some embodiments the weed control is in cereals and the co-herbicide of component b) is Bifenox.

In some preferred embodiments the co-herbicide is Bifenox and particularly for utilizing in post application.

In other embodiments the crop is soy and the component **b)** co-herbicide is chosen from aminopyralid, pendimethalin and combinations etc. thereof.

In some embodiments the undesirable vegetation to be controlled is one or more of Alopecurus myosuroides (Blackgrass), Lolium multiflorum (Bearded ryegrass), Papaver rhoeas (Corn poppy), Matricaria chamomilla (Wild chamomile), Stellaria media (Common chickweed), Veronica persica (Bird's-eye speedwell), Viola arvensis (Field violet), Cyanus segetum (Bachelor's- button) Capsella bursa-pastoris (Shepherd's purse).

In some embodiments one component of the combination is associated with herbicide resistance while the other component does not show or induce resistance, thus companion compounds are selected preferably that is not cross-resistant with other herbicides, so that one component supports the effects of other supplementary herbicides that use different modes of action.

The present subject matter also relates to methods for the selective control of undesirable vegetation in perennial

crops which comprises applying a herbicidally effective amount of component **a)** a compound (I) or agriculturally acceptable ester or salt thereof in combination with, or applied with, or in combination with co-herbicidal components of component **b),** to the undesirable vegetation or the locus thereof.

In some embodiments, compound (I) may preferably be the compound of formula (I), Halauxifen-methyl (methyl 4-amino-3-chloro-6-(4-chloro-2-fluoro-3-methoxyphenyl)pyridine-2-carboxylate). In some embodiments co-herbicidal components for application with compound (I) are each chosen from any of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof.

In some embodiments, the mixture, combination or composition etc. (combinations), may be synergistic, in enhancing the herbicidal efficacy displayed by each component.

In some embodiments the combined treatments or applications, admixtures compositions, formulations, treatment protocols, all encompassed herein by the term combination, provide a broader array of vulnerable weed species as compared to the individual components.

In various embodiments the advantages of the disclosed inventive combinations include the reduction of unwanted effects while maintaining equivalent weed control.

In certain embodiments the advantages of the disclosed inventive combinations include the longer-term control including prevention of re-emergence of the unwanted vegetation for longer periods.

In certain embodiments the advantages of the disclosed inventive combinations, include the speed at which control is achieved.

In certain embodiments the advantages of the disclosed inventive combinations, include the reduction of toxic remnants, breakdown or degradation products.

In some further embodiments the inventive combinations may display increased additive rather than synergistic unwanted negative or side-effects allowing for predictably reducing the amount of each component as compared to its mono or solo use, while simultaneously maintaining the positive herbicidal activity without the risk of unpredictably enhancing to an uncontrolled degree, the negative action that can often accompany previous synergistic herbicidal combinations.

## DETAILED DESCRIPTION OF SPECIFIC EMBODIMENTS OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains, unless either, the context in which it appears commands a different meaning or explicitly stated otherwise.

The term herbicide is used herein to mean an active ingredient, or combination of active ingredients or active composition or formulation or active application protocol, etc. that kills, controls or otherwise adversely modifies the growth of plants, generally understood to be either unwanted plants or in an unwanted location. An herbicidally effective or vegetation controlling amount is an amount of herbicide which causes an adversely modifying effect and includes deviations from natural development, killing, regulation, desiccation, retardation, and the like. The terms plants and vegetation include germinant seeds, emerging seedlings, plants emerging from vegetative propagules, and most appropriate to this invention, established vegetation.

Herbicidal activity is exhibited by the two-component inventive combinations when they are applied directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote nonselective or selective herbicidal action. Generally, it is typical to apply combinations of the present invention postemergence to relatively immature undesirable vegetation to achieve the maximum control of weeds.

As is clear, the application of each component of the two-component combination can occur as separate simultaneous or sequential applications as the effect of the combination is achieved by the same location of application receiving sufficient amounts of the combination of each component within a period of time wherein the beneficial effects of combining the two components are realized.

To be clear, for the sake of brevity, compounds are often referred to as the active moiety or the base or acid form, as should be clear to those skilled in the relevant arts, the reference to a compound is intended to include all useful

salts and or esters of that compound, to the extent that they will be suitable for the specific embodiment, unless specifically indicated that these varieties of compound are not intended. As a non-limiting example, a reference to Clopyralid, will include all useful salts and esters, not limited to, clopyralid-dimethylammonium, clopyralid-methyl, clopyralid-olamine, clopyralid-potassium, clopyralid-tripromine, to the extent that they are relevant to the particular embodiment.

For the sake of clarity, component (a) of the inventive two-component herbicidally effective combination, is sometimes referred to here as the first component, whereas component (b) of the inventive two-component herbicidally effective combination, is often referred to here as the second component. These terms of first and second are merely labels to avoid confusion. No inference should be attributed to these labels as regards the order in which the components are used, applied or compounded etc.

The herbicide active ingredients of component (a) are often referred to as Compound (I), 4-amino-3-chloro-6-(4- chloro-2-fluoro-3-methoxyphenyl)pyridine-2-carboxylic acid, and agriculturally acceptable derivatives thereof, as defined above including salts and esters etc. thereof. The specific Compound (I) of formula (1), methyl 4-amino-3-chloro-6-(4-chloro-2fluoro-3-methoxyphenyl)pyridine-2-carboxylate namely, Halauxifen-methyl, is the most preferred herbicide active ingredient of component (a), *inter alia,* because of both its commercial availability and the wealth of data available to those skilled in the arts, including the herbicidally effective amount needed to be applied as a single herbicide in the absence of other herbicidal active ingredients.

These agriculturally acceptable derivatives often have significantly different molecular weights than Compound (I) itself but their herbicidal activity is derived from the amount of the equivalent moles of Compound (I). Thus, in discussions of the amounts of Compounds (I) of component (a) in a combination or in recitation of a rate of application, or weight ratios between the herbicidal active ingredients of component (a) to the herbicidal active ingredients of component (b), The figures disclosed are to be understood as equivalents to the underivatized compound (I) unless clearly referring to the actual weight of that agriculturally acceptable derivative. Thus when e.g. a salt of compound (I) is chosen as herbicidal active ingredient of component (a) the weight of the compound (I) which is referred to is the carboxylic acid equivalent weight.

The single exception to this above general principle relates to the choice of the most preferred derivative of Compound (I), of formula (1), methyl 4-amino-3-chloro-6-(4-chloro-2-fluoro-3methoxyphenyl)pyridine-2-carboxylate namely, Halauxifen-methyl. Halauxifen-methyl has a Molecular Weight (mol wt.) of 345 g/mol, whereas Compound (I) itself has Molecular Weight (mol wt.) of 331 g/mol, thus they differ by approximately 4%.

As Halauxifen-methyl is by far the most commercially available derivative of Compound (I), when this specific derivative of compound (I) is selected as the herbicide active ingredient of component (a) in the inventive two-component herbicide combination, the term carboxylic acid equivalent weight, when referring to herbicide ingredients of component (a), it is the actual weight of Halauxifen-methyl that should be used despite the discrepancy, thus availing ourselves of the definition herein below wherein all numbers expressing quantities, percentages or proportions, and other numerical values used in the specification and claims, are to be understood as being modified in all instances by the term "about of the boundaries encompassed by any number. The clarity and ease of calculation provided by availing practitioners of this 4% leeway in calculation based on the weight of Halauxifen-methyl as the Component (a) active ingredient derivative of Compound (I) rather than the mol wt. of the acid, easily outweighs any apparent disadvantage.

Thus, in the specific singular case when Formula (1) active ingredient Halauxifen-methyl comprises an herbicide active ingredient of component (a), the value of 345 g/mol will be used and is intended to be used in calculations modified by the term carboxylic acid equivalent weight. Inventors do not believe this aberration will cause any lack of clarity, but rather will simplify the calculation process required and can only result in minor numerical discrepancies within the defined breadth of numerical recitations in this disclosure.

Often in reference to the specific herbicidal active ingredient of formula (I) which is a registered approved herbicidal ingredient of compound (I), the weight amount etc. referred to is the actual weight of the methyl ester itself, as the recommended herbicidally effective amount is available for this specific derivative. In general, the context will dictate the obvious meaning.

As used here, percentages of generally recognized and recommended herbicidally effective doses, amounts or recommended herbicidally effective rates or target rates, relate to the readily available information relating to doses, rates etc. in the accompanying manufacturer's instructions or labeling for each of the commercially available herbicidal active ingredients and compositions, that comprise each component of the inventive two-component herbicidally effective combination of herbicidal active ingredients.

Each herbicidal active ingredient is available in a plurality presentations accompanied by instructions including recommended doses and rates of application based on the manufacturers intimate knowledge of those products. For persons of skill in this field of art the herbicidally effective amounts for each active ingredient will thus clearly be understood for all commercially available presentations of each herbicidal active ingredient in each component of the two-component herbicide combinations of the invention.

Numerical examples of the percentages and corresponding amounts, of generally recognized doses or recommended herbicidally effective rates or target rates of several active ingredients within the scope of this invention are

provided within this disclosure. As used herein, the term herbicidally effective, in relation to dose, rate etc. relates to those of active ingredients which cause an adversely modifying effect in targeted harmful or otherwise undesirable vegetation. Such effects include deviations from natural development, killing, regulation, desiccation, retardation, and the like.

As used herein, the term herbicidally effective amount in connection to a combination refers to an amount of the combination which is sufficient for adequately controlling undesirable vegetation or weeds in the environment of crop plants and does not cause significant damage to the treated crop plants.

As used herein, the term herbicidally effective amount in reference to an active ingredient in a component of a two-component combination, refers to an amount of that active ingredient that is commercially recommended for use to control undesirable vegetation or weeds in the environment of crop plants. The commercially recommended amount for each active component, often specified as application rates of the commercial formulation, may be found on the label accompanying the commercial formulation. The commercially recommended application rates of the commercial formulation may vary depending on factors such as the crop plant species and the vegetation etc to be controlled.

As used herein, the terms "control" or "controlling" refers to preventing, reducing, killing, or otherwise adversely modifying the development of the undesirable vegetation or weed.

As used herein, selective control of undesirable vegetation or weed means preventing, reducing, killing, or otherwise adversely modifying the development of the undesirable vegetation in the presence of crop plants with limited adverse effect on the crop plants. For example, weed control of 80% (rated visually) with crop injury of less than or equal to 20% (rated visually) would constitute selective control. In some embodiments the adverse effect on crop plants is limited to less than 10% visually rated crop injury. Visual crop injury is a composite rating accounting for all phytotoxic effects including chlorosis, necrosis, growth inhibition, epinasty, delays in maturity and seed or fruit deformity. Visual weed control is a composite rating accounting for reductions in pest plant biomass and/or stand reduction.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes a habitat, breeding ground, plant, propagation material, soil, area, material or environment in which a pest is growing or may grow.

The term "contacting", as used herein, refers to applying the compounds and compositions of the invention to plant or vegetation, to a site of unwanted growth, to a potential site of unwanted vegetation or weeds, or the environment of and around crop plants. The application may be by methods commonly used in the art not limited to spraying, dipping, etc.

As used herein, the term "mixture" or "combination" is not limited to, a combination in any physical form, e.g., blend, solution, alloy, admix, kit or the like, but also encompasses two active components each comprising at least one more herbicidally active ingredients used in concert or a combined protocol of application with each being applied separately sequentially or simultaneously while eliciting a combined beneficial effect.

As used herein, the phrase "agriculturally acceptable carrier" means carriers which are known and accepted in the art for the formation of compositions for agricultural or horticultural use.

Throughout the application, descriptions of various embodiments use the term "comprising" or "containing"; however, it will be understood by one of skill in the art, that in some specific instances, an embodiment can alternatively be described using the language "consisting essentially of" or "consisting of."

The term "a" or "an" as used herein includes the singular and the plural, unless specifically stated otherwise. Therefore, the terms "a," "an" or "at least one" can be used interchangeably in this application. As non-limiting examples there should be no inference that reference to "a" component or "an" item is meant to mean only a single component or only a single item, and it is understood that multiple components and items are included unless specifically indicated otherwise.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about".

Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, uses of the term "about" herein specifically includes the broader of either $\pm 10\%$ from the indicated values in the range, or, taking into account the limits of the specific measuring technique to which the value pertains, an indicated value includes those values which the specified measurement technique is incapable of resolving, while the term "about" refers to at least one unit of measurement either side in that technique. In addition, the endpoints of all ranges directed to the same component or property herein are inclusive of the endpoints, are independently combinable, and include all intermediate points and ranges.

As used herein, applying a herbicide or herbicidal composition includes delivering it directly to the targeted vegetation or to the locus thereof or to the area where control of undesired vegetation is desired, but where relevant, not directly on the crops. Where crops are specifically perennial crops such as trees, orchard crops etc. sprays or granules etc. are generally directed under the trees, with foliar exposure of the crops being avoided.

Analogs of compound (I) in which the acid is derivatized to form a related substituent that can be transformed within plants or the environment to an acid group possess essentially the same herbicidal effect and are within the scope of this disclosure. Therefore, an "agriculturally acceptable derivative", when used to describe the carboxylic acid functionality at the 2position of the pyridine of the component (a) compound (I), is defined as any salt, ester, acyl hydrazide, imidate, thioimidate, amidine, amide, orthoester, acylcyanide, acyl halide, thioester, thionoester, dithiolester, nitrile or any other acid derivative well known in the art which (i) does not substantially negatively affect the herbicidal activity of the active ingredient, and/or (ii) is or can be hydrolyzed, oxidized or metabolized in plants or soil to a picolinic acid compound (I), a pyridine carboxylic acid or derivative.

It has been surprisingly found that by combining particular herbicides with Halauxifen compounds including those having different modes of action, when chosen judiciously, can create herbicidal treatments that have particular utility in various crop settings and/or against various unwanted vegetation that is commonly found in those crop settings and that each crop setting benefits to different degree from different groups of herbicides combined with Halauxifen (compound (I)) and agriculturally acceptable derivatives thereof especially Halauxifen-methyl.

A further surprising and counterintuitive aspect in some embodiments is found where the inventive combination provides no higher herbicidal activity than that envisaged on the basis of the sum of activities of each of the herbicides found therein, but sometimes a wider range of crop settings or vulnerable unwanted vegetation (weeds). Surprisingly these combinations have the unexpected benefit of being able to predictably adjust the relative amount of each component herbicide without fear that the unwanted effects on the desired crop has not been boosted unpredictably which is often the case with synergistic combinations.

A further surprising and counterintuitive aspect are realized in some embodiments where a two-component herbicidal combination of the invention comprising as component (a), an amount of active ingredient, compound (I) exemplified by Halauxifen-methyl, and an amount of at least one co-herbicide of component (b) selected from the group consisting of: Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;applied so as to thereby control undesired vegetation, wherein the amount of compound (I) active ingredient e.g. Halauxifen-methyl, applied is less than the herbicidally effective amount of e.g. Halauxifen-methyl when Halauxifen-methyl is used alone, and/or wherein the amount of each co-herbicide ingredient of component (b) applied is less than the herbicidally effective amount of co-herbicide ingredient of component (b) when the co-herbicide ingredient of component (b) is used alone.

In some embodiments, the inventive combination provides a higher herbicidal activity than that envisaged on the basis of the sum of activities of each of the herbicides found therein. Such a combination allows the reduced dosages of the individual herbicides which can damage agriculturally important plants. In these embodiments each enhanced component herbicide is not associated with levels of undesired activity that is dose-dependent, or that does not display the same level of synergistic enhancement of undesirable effects as the enhancement of positive herbicidal activity.

Preferred embodiments include providing herbicidally effective two-component weed control herbicidal combinations, comprising, as active components **a)** 4-amino-3-chloro-6-(4-chloro2-fluoro-3-methoxyphenyl)pyridine-2-carboxylic acid, and agriculturally acceptable derivatives thereof including salts and esters thereof, particularly alkyl esters; and component **b),** additional active ingredient compound or compounds being co-herbicides with tailored utility in various crops and/or unwanted vegetation or weed varieties, selected from Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof, dependent on the specific crop environment and the weeds etc. that are to be controlled.

Further Preferred embodiments include providing herbicidally effective weed control herbicidal mixtures, combinations, admixtures etc. (combinations), comprising, as active components **a)** 4-amino-3-chloro-6-(4- chloro-2-fluoro-3-methoxyphenyl)pyridine-2carboxylic acid, and agriculturally acceptable derivatives thereof including salts and esters thereof, particularly alkyl esters; and components **b)** additional active compound or compounds with tailored utility in various unwanted vegetation or weed varieties, selected from Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil;

Paraquat; Picloram; Clopyralid; Quinclorac; Tribenuron; Glyphosate; and any and all combinations etc. thereof, dependent on the specific weeds etc. that are to be controlled, most notably including *Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza bonariensis*), *Conyza canadensis,Amsinckia intermedia, Calandrinia ciliate, Erodium cicutarium, Malva parviflora, Medicago polymorpha, Poa annua, Panicum capillare, Agropyron repens,* and *Setariafaberi.*

Other preferred embodiments include methods of weed control or control of harmful or otherwise undesirable vegetation by applying herbicidally effective amounts of the inventive combinations etc. to the weeds or unwanted vegetation or the locus thereof. The herbicidally effective weed control herbicidal combinations etc. comprising, as active components a) 4amino-3-chloro-6-(4- chloro-2-fluoro-3-methoxyphenyl)pyridine-2-carboxylic acid, and agriculturally acceptable derivatives thereof including salts and esters thereof; and b) additional active compound or compounds with tailored utility in various crops, selected from Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;; and any and all combinations etc. thereof, depending on the specific crop environment.

In some embodiments, the crops are cereals and component b) any of Thiencarbazone-methyl (Thiencarbazone); Pyroxsulam; Bifenox; Diflufenican; Pinoxaden (including Pinoxaden acid and enolate form thereof); and any and all combinations etc. thereof.

In some embodiments the cereals are any of wheat, barley, rye, oats, corn and sorghum.

In some embodiments, the crops are Oilseed Rape (OSR), and component b) any of, Pendimethalin; Quinmerac; DMA-P (Dimethenamid-P); Metazachlor; and any and all combinations etc. thereof.

In some embodiments the crop settings are perennial crops which comprises applying a herbicidally effective amount of a) a compound (I) or agriculturally acceptable ester or salt thereof in combination with, or is applied with, or in mixture with (all included within the term, in combination with, as throughout), further herbicidal components, to the unwanted vegetation or the locus thereof. In some embodiments, compound (I) may preferably be the compound of formula (I), Halauxifen-methyl (methyl 4-amino-3-chloro-6-(4-chloro-2-fluoro3-methoxyphenyl)pyridine-2-carboxylate). In some embodiments further herbicidal components for application with compound (I) are each chosen from any of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof. In some embodiments, the perennial crop is tree and fruit orchards, including almond, apple, apricot, avocado, beechnut, Brazil nut, butternut, cashew, cherry, chestnut, chinquapin, citrus, crab apple, date, feijoa, fig, filbert, hickory nut, grapefruit, kiwi, lemon, lime, loquat, macadamia nut, mandarin, mayhaws, nectarine, olives, oranges (sweet and sour), peach, pear, pecan, persimmon, pistachio, plum, pome fruit, pomegranates, prune, quince, stone fruit, tangerine, tangelo, tree nuts, and walnut; and perennial plantation crops including rubber, oil palm, coffee and cacao.

In some embodiments Compound (I) is comprised of 4-amino-3-chloro-6-(4- chloro-2-fluoro3-methoxyphenyl)pyridine-2-carboxylic acid together with one or several and varied agriculturally acceptable derivatives thereof.

In some embodiments the agriculturally acceptable derivatives include those that relate to acid derivatives of the carboxylic acid functionality at the 2-position of the pyridine, which (i) does not substantially affect the herbicidal activity of the active ingredient, and (ii) is or can be hydrolyzed, oxidized or metabolized in plants or soil to compound (I).

In some embodiments the specific derivatives are chosen to facilitate combining a compound (I) in the same formulation as the further herbicides chosen to be useful for the particular crop, to overcome formulation issues of solubility, pH sensitivity; wettability chemical incompatibility and the like.

Without departing from the scope of the subject matter, the mixtures, combinations admixtures etc. and formulations (combinations), of the present subject matter may be applied in separate compositions applied simultaneously, that is jointly or separately, or in succession, in sequence, in the case of separate application where individual applications are separated by up to several hours. The application of the two-component individual compounds jointly or separately generally does not have any effect on the result of the control measures.

In the case of the combined use of several active ingredients, it is not a rare event for phenomena of chemical, physical incompatibility to occur, for example inadequate stability of a coformulation, decomposition of an active ingredient. High stability is always desired. In preparing the inventive combinations as combined formulations, a further choice is made within the preferred group of co-herbicides based on results of their compatibility in binary mixtures preferably together with proposed adjuvants ingredients etc. to ensure stability. Persons of skill in these arts are well aware of how such an analysis might be conducted to choose the optimum compound (I) derivative and co-herbicide and amounts of each out of the group of possible choices.

A composition can be formulated comprising a compound (I) including agriculturally acceptable derivatives thereof with the co-herbicide or co-herbicides, tank mixed with the co-herbicide or co-herbicides or applied as mentioned, formulated separately.

The weight ratio between the a) compound (I) component or components type and the co-herbicide b) component or components cannot generally be defined, as it varies depending upon various conditions such as the type of the formulation, weather conditions, the type of crop and the type of unwanted vegetation. However, quite typically the weight ratio of the pyridine carboxylic acid of the one or more compound (I) component (a) to the second (b) coherbicide component at which the herbicidal effect is synergistic lies within the range of between 10:1 and 1:500 most typically between 5:1 and 1:256.

In some embodiments the weight ratio of the pyridine carboxylic acid of the one or more compound (I) component (a) to the (b) co-herbicide component at which the herbicidal effect is synergistic lies within the range of between 3:1 and 1:320.

In some preferred embodiments, the herbicidally effective rate at which either the first, pyridine carboxylic acid of the one or more compound (I) component (a) and or the second (b) co-herbicide component are applied in the inventive methods are significantly lower than the rate at which they would each need to be applied if they were applied in the absence of the other component, to achieve the same or comparable levels of control efficacy.

The rate at which the inventive combinations, compositions mixtures admixtures etc., which are all included in the term combinations, are applied will depend upon the particular type of weed to be controlled, the degree of control required, and the timing and method of application. In general, the combinations etc. of the invention can be applied at an application rate of between 1 gram per hectare (g/ha) and 2400 g/ha more often between 8 grams per hectare (g/ha) and 1200 g/ha based on the total amount of active ingredients in the combination. Depending upon the particular co-herbicide (b) used, the co- herbicide component is applied at a rate between 0.5 g/ha and 2,240 g/ha and typically between 4 g/ha and 1120 g/ha and the pyridine carboxylic acid of compound (I) component (a) is applied at a rate between 0.5 g/ha and 160 g/ha, more typically between 4 g/ha and 80 g/ha.

The inventive compositions, mixtures, combinations, formulations, admixtures etc.

(all included in the term combinations), comprising, as active components a) 4-amino-3-chloro-6-(4- chloro-2-fluoro3-methoxyphenyl)pyridine-2-carboxylic acid, and agriculturally acceptable derivatives thereof including salts and esters thereof; and b) additional active compound or compounds with tailored utility in various crops, each chosen from any of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof.

Preferably in the examples below, component a) is methyl 4-amino-3-chloro-6-(4-chloro-2fluoro-3-methoxyphenyl)pyridine-2-carboxylate **(H-m)** although combinations of one or several and varied agriculturally acceptable derivatives of compound (I) are specifically contemplated.

In those embodiments where the crops are Oilseed Rape (OSR), and component b) any of, Pendimethalin; Quinmerac; DMA-P (Dimethenamid-P); Metazachlor; and any and all combinations etc. thereof, a range contemplated combinations, mixtures etc., all referred to as combinations, can be envisioned as a matrix e.g. **Table 1** below although, as mentioned **H-m,** is only an exemplary component a) compound. Using the testing examples below, the most appropriate and/or compatible of these combinations can be chosen.

This matrix table form is similarly useful in the other crops by replacing the compounds b) with the options specified for each crop, below. Simply for the sake of brevity only a single example of this simple table is presented.

In those embodiments where the crops are Sunflower Component a) is preferably **H-m,** and component b) chosen from any of, aclonifen; imazamox, quizalofop, clethodim; and any and all combinations etc. thereof.

In those embodiments where the crops are cereals Component a) is preferably **H-m** and component b) chosen from any of Thiencarbazone-methyl (Thiencarbazone); Pyroxsulam; Bifenox; Diflufenican; Pinoxaden (including Pinoxaden acid and enolate form thereof); and any and all combinations etc. thereof.

In those embodiments where the crops are perennial crops Component a) is preferably **H-m** and component b) chosen from any of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox; and any and all combinations etc. thereof.

| | | Oil Seed Rape COMPONENT b) | | | |
|---|---|---|---|---|---|
| | | Pendimethalin | Quinmerac | Dimethenamid-P | Metazachlor |
| COMPONENT a) | H-m | X | | | |
| | H-m | | X | | |
| | H-m | | | X | |
| | H-m | | | | X |
| | H-m | X | X | | |
| | H-m | X | | X | |
| | H-m | X | | | X |
| | H-m | | X | X | |
| | H-m | | X | | X |
| | H-m | | | X | X |
| | H-m | X | X | X | |
| | H-m | X | X | | X |
| | H-m | | X | X | X |
| | H-m | X | | X | X |
| | H-m | X | X | X | X |

TABLE 1

In each crop or weed embodiment the possible combinations of those combined applications suited best as appropriate can be presented in a table similar to Table 1, with the changes in appropriate co-herbicides mutatis mutandis to reflect all possible combinations. Table 1 is thus simply an example of the range of all possible combinations for one particular crop and for each crop a similar table can be prepared.

While inventors note that the advantages of combining co-herbicidal component (b) applications with pyridine carboxylic acid component (a) and/or derivatives thereof has been shown in practice, there is sound plausible reason to extrapolate that two or more component (b) co-herbicides, each proven to be enhanced by and/or to enhance pyridine carboxylic acid components (a) and/or derivatives thereof should similarly have enhanced attributes. In other words, unless proven otherwise each component (b) co-herbicide will not deleteriously effect a combination application that comprises a different co-herbicide combined with one or more pyridine carboxylic acid component (a) and/or derivatives thereof.

The inventors thus also envision the specific advantages of the combination of several herbicides in enabling the reduction in the amount of each of the active ingredients comprising the two-component combination to amounts below the levels at which they would individually be herbicidally effective in absence of the other herbicidal active ingredients of the combination.

The present subject matter also relates to methods of weed control or control of undesirable vegetation by applying herbicidally effective amounts of the inventive combinations etc. to the weeds or unwanted vegetation or the locus thereof.

In some embodiments the weed control or control of undesirable vegetation is selective control.

In some embodiments one component of the mix, combination etc. is associated with herbicide resistance while the other does not show resistance, thus companion compound is selected preferably that is not cross-resistant with other herbicides, so that one component supports the effects of other supplementary herbicides that use a different mode of action.

The present subject matter also relates to methods for the selective control of undesirable vegetation in perennial crops which comprises applying a herbicidally effective amount of a) a compound (I) or agriculturally acceptable ester or salt thereof in combination with, or is applied with, or in mixture with further herbicidal components,(i.e. combinations) to the unwanted vegetation or the locus thereof. In some embodiments, compound (I) may preferably be the compound of formula (I), Halauxifen-methyl (methyl 4-amino-3-chloro-6(4-chloro-2-fluoro-3-methoxyphenyl)pyridine-2-carboxylate). In some embodiments further herbicidal components for application with compound (I) are each chosen from any

of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations etc. thereof.

The application rates of the combination, or the combined application rates may vary, depending on the desired effect and conditions. In an embodiment, depending on the desired effect, the application rates of the combination according to the invention are from 1 g/ha to 10000 g/ha, particularly from 10 to 5000 g/ha, more particularly from 50 to 2000 g/ha. Although, with particularly efficacious combination applications and favorable conditions, desired effects are achievable with even lower rates of application without departing from the inventive concept. Similarly, over-spraying at higher rates of application e.g. as an attempt to overcome challenging environmental conditions, or even mistakenly, will also not depart from the inventive concept.

Herbicidal activity is exhibited by the combinations when they are applied directly to the plant to be controlled or to the locus of the plant to be controlled. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. In the present methods, the combinations described herein are typically applied in application to undesirable vegetation or to relatively immature and mature undesirable vegetation to achieve the maximum control of weeds. At an application rate of 0.5 to 80 g ae/ha, Compound I as an application is highly efficacious on several commercially relevant broadleaf and grass weeds, including chickweed (Stellaria media), pigweed (Amaranthus spp.), common lambsquarters (Chenopodium album), hairy fleabane (Conyza bonariensis), horseweed (Conyza canadensis), coast fiddleneck, (Amsinckia intermedia), Shepherd’s purse (Capsellabursa-pastoris), rockpurslane (Calandrinia ciliata), redstem filaree (Erodium cicutarium), smallflower malva (Malva parviflora), California burclover (Medicago polymorpha), annual bluegrass (Poa annua), witchgrass (Panicum capillare), quackgrass (Agropyron repens), and giant foxtail (Setariafaberi). The level of crop safety exhibited by crops toward Compound I is variable, but generally post-emergence application rates of less than 20 g ae/ha cause little to no crop injury. Additional examples of application rates for Compound I include 0.25 to 100 g ae/ha, 0.25 to 80 g ae/ha, 0.25 to 70 g ae/ha, 0.25 to 50 g ae/ha, 0.25 to 45 g ae/ha, 0.25 to 40 g ae/ha, 0.25 to 35 g ae/ha, 0.25 to 30 g ae/ha, 0.25 to 25 g ae/ha, 0.25 to 20 g ae/ha, 0.25 to 15 g ae/ha, 0.25 to 10 g ae/ha, 0.25 to 5 g ae/ha, 2.5 to 50 g ae/ha, 5 to 50 g ae/ha, 10 to 50 g ae/ha, 15 to 50 g ae/ha, 20 to 50 g ae/ha, 25 to 50 g ae/ha, 30 to 50 g ae/ha, 35 to 50 g ae/ha, 40 to 50 g ae/ha, 45 to 50 g ae/ha, 5 to 40 g ae/ha, 10 to 40 g ae/ha, 15 to 40 g ae/ha, 20 to 40 g ae/ha, 25 to 40 g ae/ha, 30 to 40 g ae/ha, 35 to 40 g ae/ha, 2.5 to 35 g ae/ha, 2.5 to 30 g ae/ha, 2.5 to 25 g ae/ha, 2.5 to 20 g ae/ha, 2.5 to 15 g ae/ha, 2.5 to 10 g ae/ha, 2.5 to 5 g ae/ha, 5 to 35 g ae/ha, 10 to 30 g ae/ha, 15 to 25 g ae/ha, and 15 to 20 g ae/ha. Further examples of application rates for Compound I include 0.25 g ae/ha, 0.5 g ae/ha, 0.75 g ae/ha, 1 g ae/ha, 1.25 g ae/ha, 1.5 g ae/ha, 1.75 g ae/ha, 2 g ae/ha, 2.25 g ae/ha, 2.5 g ae/ha, 3 g ae/ha, 4 g ae/ha, 5 g ae/ha, 6 g ae/ha, 7 g ae/ha, 8 g ae/ha, 9 g ae/ha, 10 g ae/ha, 12 g ae/ha, 14 g ae/ha, 16 g ae/ha, 18 g ae/ha, 20 g ae/ha, 22 g ae/ha, 24 g ae/ha, 26 g ae/ha, 28 g ae/ha, 30 g ae/ha, 32 g ae/ha, 34 g ae/ha, 36 g ae/ha, 38 g ae/ha, 40 g ae/ha, 42 g ae/ha, 44 g ae/ha, 46 g ae/ha, 48 g ae/ha, and 50 g ae/ha.

The combination of active substances can be diluted and applied in a customary manner, for example by watering (drenching), drip irrigation, spraying, and atomizing.

In yet another embodiment, the compositions of components may be applied in various combinations of compound **(I)** herbicide and co-herbicide or co-herbicides, for example in a single "ready-for-use" form, or in a combined spray combination composed from separate formulations of the individual active ingredients, such as a "tank-mix" form.

In further embodiments compositions of each component, active ingredient or the entire combination may be formulated as any of various known concentrated forms to be used in *in-situ* to prepare a ready for use form.

In yet another embodiment, compositions are applied in the form of ready-for-use formulation comprising **a)** a Compound (I) and **b)** a co-herbicide. These formulations can be obtained by combining the two-component active ingredients in herbicidal effective amount with agriculturally acceptable carrier, surfactant, pH modifying ingredient e.g. base or acid as required, or other application-promoting adjuvant customarily employed in formulation technology. A non-limiting example might include a combination of Halauxifen, Aminopyralid and a base.

For example, a composition of the present invention is preferably applied in the form of a ready-for-use formulation comprising not less than one component **a)** compound (I) and not less than one component **b)** co-herbicide chosen to be suited to the crop environment of choice, which can be obtained by combining the active ingredients with agriculturally acceptable carrier, surfactant, pH modifying ingredient or base or acid in non-aqueous systems, as required, or other application-promoting adjuvant customarily employed in formulation technology.

The compositions embodiments of the combinations may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW)

such as oil-inwater and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, watersoluble granules (SG), water-dispersible granules (WDG), ULV formulations, microcapsules or waxes. These individual formulation types are well known in the art.

According to an embodiment, compositions comprise at least one additional component selected from the group of surfactants, solid diluents and liquid diluents, dispersants, pH modifying agents and combinations thereof.

Such compositions can be formulated using agriculturally acceptable carriers, surfactants or other application-promoting adjuvants customarily employed in formulation technology and formulation techniques that are known in the art.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropropylene glycol; N,N-dimethylformamide; dimethylsulfoxide; dimethylacetamide; Nalkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4methyl-2-pentanone; and the like.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

In an embodiment, the amount of the combination of active ingredients in the composition is from about 0.1%, 0.5%, 1%, 1.5%, 2%, 2.5%, 3%, 3.5%, 4%, 4.5%, 5% to about 90%, 93%, 94%, 95%, 97%, 98%, 99% based on the total weight of the composition.

In another embodiment, the combined amount of Component **a),** one or several of compounds **(I)** herbicidal active ingredients and component **b),** one or several co-herbicidal active ingredients chosen from the group of co-herbicides suitable for the specific crop environment of intended use, as detailed above together in the ready-to-use formulations is 0.01-98 wt. %, 0.1-96 wt. % 1-95 wt. %, 10 - 87wt.%, particularly 75-95 wt. %, based on the total weight of the formulation.

For example, the combined amount of compound (I) and co-herbicidal component in the ready-to-use formulations according to the invention is 0.01-95 wt.%, particularly 0.1-90 wt. %, more particularly 1-90 wt. %, even more particularly is 10-90 wt. %, based on the total weight of the formulation.

The present composition may include additional crop protection agents, for example insecticides, fungicides, bactericides, nematicides, molluscicides, growth regulators, biological agents, fertilizers, or mixtures thereof. However, for the avoidance of doubt it is understood that such additional crop protection agents are unnecessary to achieve the desired control of unwanted vegetation in the specific crop environments as achieved by the present combinations. Accordingly, the present herbicidal compositions and combinations may be limited to containing Compound (I) herbicides (e.g. H-m) and co-herbicide chosen for its suitability in the crop environment, as the only crop protection agents present.

In another embodiment, the present invention provides a kit comprising a synergistic herbicidal composition as described herein, or components thereof. Such kits may comprise, in addition to the aforementioned active components, one or more additional active and/or inactive ingredients, either within the provided herbicidal composition or

separately. Certain kits comprise **a)** not less than one Compound (I) herbicide and **b)** co-herbicide(s), chosen for the intended crop environment, each in a separate container, and each optionally combined with a carrier.

As noted above, the some of the combinations including without limitation, compositions, kits and methods described herein exhibit a synergistic effect. A synergistic effect exists wherever the action of a combination of active components is greater than the sum of the action of each of the components alone. Therefore, a synergistically effective amount (or an effective amount of a synergistic composition or combination) is an amount that exhibits greater herbicidal activity than the sum of the herbicidal activities of the individual components.

As noted above, some of the two-component combinations and and methods described herein advantageously, exhibit an additive herbicidal effect, while exhibiting a reduced level of unwanted negative effects including damage to the crop of interest through lack of selectivity of individual components applied individually. An additive effect exists wherever the action of a combination of active components is roughly equal, or not less than the sum of the action of each of the components alone i.e. not antagonistic.

Therefore, the exact herbicidal doses of each component can be calculated for each of the proposed combinations by simply employing known equations based on the dose related positive activities of each individual component, which is inter alia available in the literature or by simple test, while simultaneously reducing the unwanted damage and pollution levels associated with each component, without the trial and error associated with applying synergistic combinations where unwanted effects e.g. damage to crops, are enhanced together with enhanced desired effects in an unpredictable fashion.

This issue is also true for the unwanted synergy of herbicidal pollutants. See, Toxicity of Herbicides: Impact on Aquatic and Soil Biota and Human Health, Maria Aparecida et. al. http://dx.doi.org/10.5772/55851 and, Moraes, D.S.L. Avaliação dos potenciais tóxicos, citotóxicos e genotóxicos de águas ambientais de Corumbá-MS em raízes de Allium cepa. 2000. 158 f. Tese (Mestrado em Genética e Melhoramento) - Universidade Estadual de Londrina, Londrina.

The efficacy (E) of each individual component in the specific crop environment is calculated as follows using Abbott's formula:

$$E=(1-A/B)\cdot 100$$

A corresponds to the herbicidal efficacy of the individual component in the treated crop environment in % and, B corresponds to the herbicidal efficacy in the untreated (control) environment achieved by applying the intended carrier composition in the absence of any active compounds (blank) in %.

An efficacy of 0 means that the level of unwanted vegetation in the treated plants corresponds to that of the untreated control plants; an efficacy of 100 means that the treated crop environment have been maximally controlled.

As mentioned above in the embodiments where the combinations etc. display additive effects, the amount of each component can advantageously be simply calculated as follows using the so-called Colby equation as found an article entitled "Calculation of the synergistic and antagonistic responses of herbicide combinations" published in the journal Weeds, 1967, 15, p. 20-22. The action expected for a given combination of two active components can be calculated as follows:

$$E=X+Y-\frac{XY}{100}$$

in which E represents the expected percentage of herbicidal control for the combination of the two herbicides at defined doses (for example equal to x and y respectively), X is the percentage of herbicidal control observed by the **a)** component, compound (I) etc. at a defined dose (equal to x), Y is the percentage of herbicidal control observed by the co-herbicide or coherbicides component **b)** at a defined dose (equal to y).

In exemplary embodiments various commercially available compositions are applied in combination to post emergent weeds at rates and amounts which are below the generally recognized and recommended herbicidally effective rates or target rates, and amounts applied, to achieve control of unwanted, undesired or undesirable vegetation or weeds. Levels of control are comparable with individual solo applications in the absence of the other component, but at significantly higher doses.

In embodiments within the scope of this invention, the herbicidally effective amount of the two-component combination comprises from about 5% to about 95% of the herbicidally effective amount of each herbicide active ingredient of component **(a)** combined with from about 95% to about 5% of the herbicidal effective amount of each herbicide active ingredient of component **(b)** co-herbicide, when applied in the absence of any other herbicide active ingredient.

In embodiments within the scope of this invention the herbicidally effective amounts of the two-component

combination comprise any of, not less than 5%; about 10%; about 15%; about 20%; about 25%; about 30% about 35% about 40%; about 45%; about 50%; about 55%; about 60% about 65%; about 70%; about 75%; about 80% about 85%; about 90% or less than 95% of each component **(a)** combined with any of, not less than 5%; about 10%; about 15%; about 20%; about 25%; about 30% about 35% about 40%; about 45%; about 50%; about 55%; about 60% about 65%; about 70%; about 75%; about 80% about 85%; about 90% or less than 95% of each component **(b)** co-herbicide. In further exemplary embodiments, the amounts in the two-component herbicide combination and the rates at which each individual active ingredient in each component in the combination application of the two-component herbicide combination as applied are each selected from, about 35%, about 50% or about 75%, of the generally recognized or recommended, herbicidally effective amounts or rates for each herbicidal active ingredient of each component of the two-component herbicide.

The present subject matter thus also relates to methods for the selective control of undesirable vegetation in crops which comprises applying a herbicidally effective amount of a two-component combination of, as component **a)** a compound (I) or agriculturally acceptable ester or salt thereof in combination with, or is applied with, or in mixture with, (all included in the term in combination with), further herbicidal components **b)** to the unwanted vegetation or the locus thereof, wherein the herbicidally effective amount of each combination comprises less than the recommended application of each component individually.

Inventors have considered that useful embodiments that the herbicidally effective amount of the two-component combination is from about 5% to about 95% of each herbicide ingredient of component **(a)** with from about 95% to about 5% of each component **(b)** co-herbicide.

In typical embodiments, the herbicidally effective amount of the two-component combination comprises from about 35% to about 75% of each component **(a)** active ingredient, combined with from about 35% to about 75% of each component **(b)** co-herbicide.

In noted embodiments the undesired vegetation is any or all of Alopecurus myosuroides, Apera spica-venti, Avena fatua, Bromus sterilis, Lolium multiflorum,Tripleurospermum inodorum, Papaver rhoeas, Matricaria chamomilla, Stellaria media, Veronica persica, Viola arvensis,Cyanus segetum, Lamium purpureum, Chenopodium album, Sinapis arvensis L.

In order to demonstrate with further clarity, if needed, embodiments include the following exemplary two-component herbicidal combination applications, using commercial preparations of each component, with reference to the recommended individual solo application rates, see Table 2 water volume rate is 200 L/ha.

**TABLE 2**

| Active Content in g AI/L | Rate L/ha | g ai/ha | % Target Rate Of Each Ai |
|---|---|---|---|
| Halauxifen 68.5<br>Thiencarbazone 10 | 0.0255<br>0.175 | 1.75<br>1.75 | 35% of each ai |
| Halauxifen<br>Thiencarbazone 10 | 0.0365<br>0.25 | 2.5<br>2.5 | 50% of each ai |
| Halauxifen 68.5<br>Thiencarbazone 10 | 0.0547<br>0.375 | 3.75<br>3.75 | 75% of each ai |
| Halauxifen 68.5<br>Thiencarbazone 10 | 0.0547<br>0.175 | 3.75<br>1.75 | 75% Halauxifen<br>35% Thiencarbazone |
| Halauxifen 68.5<br>Thiencarbazone 10 | 0.0255 0.375 | 1.75<br>3.75 | 35% Haluaxifen<br>75% Thiencarabazone |
| Halauxifen 68.5<br>Diflufenican 500 | 0.0255<br>0.0875 | 1.75<br>43.75 | 35% of each ai |
| Halauxifen 68.5<br>Diflufenican 500 | 0.0365 0.125 | 2.5<br>62.5 | 50% of each ai |
| Halauxifen 68.5<br>Diflufenican 500 | 0.0547 0.1875 | 3.75<br>93.75 | 75% of each ai |
| Halauxifen 68.5<br>Diflufenican 500 | 0.0547 0.0875 | 3.75<br>43.75 | 75% Halauxifen<br>35% Diflufenican |
| Halauxifen 68.5<br>Diflufenican 500 | 0.0255 0.1875 | 1.75<br>93.75 | 35% Halauxifen<br>75% Diflufenican |

(continued)

| Active Content in g AI/L | Rate L/ha | g ai/ha | % Target Rate Of Each Ai |
|---|---|---|---|
| Halauxifen 68.5 Bifenox 480 | 0.0255 0.525 | 1.75 252 | 35% of each ai |
| Halauxifen 68.5 Bifenox 480 | 0.0365 0.75 | 2.5 360 | 50% of each ai |
| Halauxifen 68.5 Bifenox 480 | 0.0547 1.125 | 3.75 540 | 75% of each ai |
| Halauxifen 68.5 Bifenox 480 | 0.0547 0.525 | 3.75 252 | 75% Halauxifen 35% Bifenox |
| Halauxifen 68.5 Bifenox 480 | 0.0255 1.125 | 1.75 540 | 35% Haluaxifen 75% Bifenox |
| Halauxifen 68.5 Pyroxsulam 75 | 0.0255 0.0875 | 1.75 6.5625 | 35% of each ai |
| Halauxifen 68.5 Pyroxsulam 75 | 0.0365 0.125 | 2.5 9.375 | 50% of each ai |
| Halauxifen 68.5 Pyroxsulam 75 | 0.0547 0.1875 | 3.75 14.0625 | 75% of each ai |
| Halauxifen 68.5 Pyroxsulam 75 | 0.0547 0.0875 | 3.75 6.5625 | 75% Halauxifen 35% Pyroxsulam |
| Halauxifen 68.5 Pyroxsulam 75 | 0.0255 0.1875 | 1.75 14.0625 | 35% Haluax 75% Pyroxsulam |
| Pinoxaden 55 Halauxifen 68.5 | 0.2864 0.0255 | 15.75 1.75 | 35% rate of each ai |
| Pinoxaden 55 Halauxifen 68.5 | 0.4091 0.0365 | 22.5 2.5 | 50% rate of each ai |
| Pinoxaden 55 Halauxifen 68.5 | 0.6136 0.0547 | 33.75 3.75 | 75% rate of each ai |
| Pinoxaden 55 Halauxifen 68.5 | 0.6136 0.0547 | 33.75 3.75 | 75% Pinoxaden 35% Halauxifen |
| Pinoxaden 55 Halauxifen 68.5 | 0.2864 0.0255 | 15.75 1.75 | 35% Pinoxaden 75% Halauxifen |

In some other exemplary embodiments, various commercially available compositions are combined and applied to post emergent Matricaria camomilla with the following observations.

Combinations of individual commercial compositions of Halauxifen-methyl and Thiencarbazone-methyl give good control at all rates of use above Halauxifen-methyl 1.75g A/ha and Thiencarbazone-methyl 1.75g A/ha, that is, both active ingredients at greater than 35% of the recommended herbicidally effective dose (RHED), though no greater than about 75% of the same recommended dose, though perhaps not optimal at every point within that range.

Two-component combinations of individual compositions of Halauxifen-methyl and Diflufenican give near complete control at a wide range of rates of use particularly above Halauxifen-methyl 1.75g A/ha (35% RHED) and Diflufenican 43.8g A/ha (35% RHED). Combinations of individual compositions of Halauxifen-methyl and Bifenox give near complete control at a wide range of rates of use, particularly above Halauxifen-methyl 1.75g A/ha and Bifenox above 252g A/ha (35% RHED).

Combinations of individual compositions of Halauxifen-methyl and Pyroxsulam/Cloquintocet-mexyl give near complete control at a wide range of rates of use particularly, above Halauxifen-methyl 1.75g A/ha and Pyroxsulam, at or above 13.1g A/ha.

It is worth noting that in a recent article, the proposed commercial rates of Pyroxsulam of 15g A/ha and 18 g

A/ha (114% - 137% of the rate above), when applied to wheat to control Lolium multiflorum caused up to 10% visual injury in wheat. Pyroxsulam when applied at 21, 30, 36 and 42 g A/ha caused even greater than 10% injury in the wheat crop. See, Zobiole, L.H.S., et al. Pyroxsulam: Sulfonamide Herbicide for Weed Control in Wheat in Brazil. Planta Daninha, 36, e018155253. Epub September 03, 2018. Available from http://www.scielo.br/scielo.php?script=sci_arttext&pid=S010083582018000100263&lng=en &nrm=iso. https://dx.doi.org/10.1590/s0100-83582018360100064

Even if the crop might eventually recover, it can be clearly be seen that being able to reduce the applied dose by greater than 12% (Pyroxsulam 13.1g A/ha), while managing to achieve adequate control of the unwanted vegetation but with less crop damage is a clear advantage.

In some exemplary embodiments, various commercially available compositions are combined and applied to post emergent *Papaver rhoeas* with the following observations.

Combinations of individual commercial compositions of Halauxifen-methyl and Thiencarbazone-methyl give near complete control at rates of use particularly Halauxifenmethyl 2.5g A/ha and Thiencarbazone-methyl 2.5g A/ha or above, and even at a lower rate of use of Halauxifen-methyl 1.75g A/ha and Thiencarbazone-methyl 1.75g A/ha, the two-component combinations achieve levels of control.

Combinations of individual compositions of Halauxifen-methyl and Diflufenican give near complete control at a wide range of rates of use particularly above Halauxifen-methyl 1.75g A/ha and Diflufenican 43.8g A/ha. Combinations of individual compositions of Halauxifenmethyl and Bifenox give complete control at a wide range of rates of use, particularly above Halauxifen-methyl 1.75g A/ha and Bifenox above 252g A/ha and is one of the most rapid acting combination against this species. Combinations of individual compositions of Halauxifen-methyl and Pyroxsulam/Cloquintocet-mexyl give near complete control at a wide

range of rates of use, particularly above Halauxifen-methyl 1.75g A/ha and Pyroxsulam/Cloquintocet-mexyl, above 13.1g A/ha.

In some other exemplary embodiments, various commercially available compositions are combined and applied to post emergent *Matricaria camomilla* with the following observations. Combinations of individual commercial compositions of Halauxifen-methyl and Thiencarbazone-methyl give good control at all rates of use above Halauxifen-methyl 1.75g A/ha and Thiencarbazone-methyl 1.75g A/ha, though perhaps not always optimal. Combinations of individual compositions of Halauxifen-methyl and Diflufenican give near complete control at a wide range of rates of use particularly above Halauxifen-methyl 1.75g A/ha and Diflufenican 43.8g A/ha. Combinations of individual compositions of Halauxifenmethyl and Bifenox give near complete control at a wide range of rates of use, particularly above Halauxifen-methyl 1.75g A/ha and Bifenox above 252g A/ha.

Combinations of individual compositions of Halauxifen-methyl and Pyroxsulam/Cloquintocet-mexyl give near complete control at a wide range of rates of use particularly, above Halauxifen-methyl 1.75g A/ha and Pyroxsulam/Cloquintocet-mexyl, above 13.1g A/ha.

In further exemplary embodiments, various commercially available compositions are combined and applied to post emergent *Stellaria media* with the following observations.

Combinations of individual commercial compositions of Halauxifen-methyl and Thiencarbazone-methyl give near complete control at all rates of use above Halauxifenmethyl 3.75g A/ha and Thiencarbazone-methyl 3.75g A/ha, and even at a lower rate of use of Halauxifen-methyl 1.75g A/ha and Thiencarbazone-methyl 1.75g A/ha, achieves levels of control though not optimal.

Combinations of individual compositions of Halauxifen-methyl and Diflufenican give near complete control at a wide range of rates of use particularly above Halauxifen-methyl 1.75g A/ha and Diflufenican 43.8g A/ha.

Combinations of individual compositions of Halauxifen-methyl and Bifenox give near complete control at a wide range of rates of use, particularly above Halauxifen-methyl 1.75g A/ha and Bifenox above 252g A/ha.

Combinations of individual compositions of Halauxifen-methyl and Pyroxsulam/Cloquintocet-mexyl give near complete control at a wide range of rates of use particularly, above Halauxifen-methyl 1.75g A/ha and Pyroxsulam/Cloquintocet-mexyl, above 13.1g A/ha.

In still further exemplary embodiments, various commercially available compositions are combined and applied to post emergent *Veronica persica* with the following observations.

Combinations of individual commercial compositions of Halauxifen-methyl and Thiencarbazone-methyl give near complete control at all rates of use particularly above Halauxifen-methyl 1.75g A/ha and Thiencarbazone-methyl 1.75g A/ha.

Combinations of individual compositions of Halauxifen-methyl and Diflufenican give near complete control at a wide range of rates of use particularly above Halauxifen-methyl 1.75g A/ha and Diflufenican 43.8g A/ha.

Combinations of individual compositions of Halauxifen-methyl and Bifenox give near complete control at a wide range of rates of use, particularly above Halauxifen-methyl 1.75g A/ha and Bifenox above 252g A/ha. This combination is one of the most rapid acting combinations against this species.

Combinations of individual compositions of Halauxifen-methyl and Pyroxsulam/Cloquintocet-mexyl give near

complete control at a wide range of rates of use particularly, above Halauxifen-methyl 1.75g A/ha and Pyroxsulam/Cloquintocet-mexyl, above 13.1g A/ha.

In a limited number of exemplary embodiments, various commercially available compositions are combined and applied to post emergent *Cyanus segetum* with the following observations.

Combinations of individual commercial compositions of Halauxifen-methyl and

Thiencarbazone-methyl give good levels of control at rates of use particularly above Halauxifen-methyl 1.75g A/ha and Thiencarbazone-methyl 1.75g A/ha though not always optimal.

Combinations of individual compositions of Halauxifen-methyl and Diflufenican give levels of control at a wide range of rates of use particularly above Halauxifen-methyl 1.75g A/ha and Diflufenican 43.8g A/ha though not always optimal.

Combinations of individual compositions of Halauxifen-methyl and Bifenox give near complete control at a wide range of rates of use, particularly above Halauxifen-methyl 3.75g A/ha and Bifenox above 540g A/ha although at rates of use above Halauxifen-methyl 1.75g A/ha and Bifenox above 252g A/ha show good levels of control though not always optimal.

Combinations of individual compositions of Halauxifen-methyl and Pyroxsulam/Cloquintocet-mexyl give good control at a wide range of rates of use particularly, above Halauxifen-methyl 1.75g A/ha and Pyroxsulam/Cloquintocet-mexyl, above 13.1g A/ha though not always optimal.

In some embodiments the undesired vegetation is *Alopecurus myosuroides* or *Lolium multiflorum* and an effective two-component combination comprises Halauxifen-methyl as component a) combined with at least two different co-herbicides as component b) to give levels of control.

In certain embodiments the herbicides are provided in separate previously compounded compositions.

In certain embodiments each of the herbicides to be applied, are independently provided in separate, previously compounded compositions, each of which may be in the form of suspension concentrate which are understood to be stable suspensions of active ingredient(s) in water, intended for dilution with water before use.

In certain embodiments each of the herbicides to be applied, are independently provided in separate, previously compounded compositions, each of which may be in the form of water dispersible granules which are understood to be dry formulations comprising granules to be applied after disintegration and dispersion in water.

In certain embodiments each of the herbicidal active ingredients to be applied, are independently provided in separate, previously compounded compositions, each of which may be in the form a liquid, often in concentrated form to be diluted before application though possibly as ready to use liquids.

In certain embodiments each of the herbicidal active ingredients to be applied, are independently provided in separate, previously compounded compositions, each of which may be in the form of liquid oil dispersion which are understood to include stable suspensions of active ingredient(s) in water-immiscible fluid, which may contain other dissolved active ingredient(s), intended for dilution with water before use.

These and other forms of compounded herbicides useful to be used in combination and will become apparent to those skilled in the arts of formulating and compounding pesticide compositions.

In some embodiments, compositions provided herein further comprise at least one agriculturally acceptable adjuvant and/or carrier. Suitable adjuvants or carriers should not be phytotoxic to valuable crops, particularly at the concentrations employed in applying the compositions for selective weed control in the presence of crops and should not react chemically with herbicidal components or other composition ingredients. Such combinations can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank mixed.

Suitable agricultural adjuvants and carriers that are useful in preparing the herbicidal combinations of the invention are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, N-methyl-2-pyrrolidinone, N,N-dimethyl alkylamides, dimethyl sulfoxide, liquid fertilizers and the like. Water is typically the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants,

fungicides, insecticides, and the like and can be formulated with liquid fertilizers or solid, particulate fertilizer carriers such as ammonium nitrate, urea and the like.

The concentration of the herbicidally active ingredients in the two-component compositions embodiments of the present invention is generally from 0.001 to 98 percent by weight when in a composition.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol (C2-C6) ethoxylate; di-seobutylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) ioleate-99; paraffinic oil, alkoxylated alcohol non-ionic surfactant; mineral oil, surfactant blend.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, N,N-dimethyl alkylamides, dimethyl sulfoxide, liquid fertilizers and the like. In certain embodiments, water is the carrier for the dilution of concentrates.

Suitable solid carriers include but are not limited to talc, pyro-phyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, inter alia, in McCutcheon's Detergents and Emulsifiers Annual, MC Publishing Corporation: Ridgewood, NJ, 1998 and in Encyclopedia of Surfactants, Vol. I-III, Chemical Publishing Company: New York, 1980-81.

Surface-active agents include, but are not limited to salts of alkyl sulfates, such as diethanolammonium lauryl sulfate; alkylarylsulfonate salts, such as calcium dodecylbenzenesulfonate; alkylphenol- alkylene oxide addition products, such as nonylphenol-Cis ethoxylate; alcohol-alkylene oxide addition products, such as tridecyl alcohol-Ci6 ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from 0.0005 to 98 percent by weight. In some embodiments, the concentration is from 0.0006 to 90 percent by weight. In compositions designed to be employed as concentrates, the active ingredients, in certain embodiments, are present in a concentration from 0.1 to 98 weight percent, and in certain embodiments 0.5 to 90 weight percent. Such compositions are, in certain embodiments, diluted with an inert carrier, such as water, before application. The diluted compositions usually applied to weeds or the locus of weeds contain, in certain embodiments, 0.0006 to 15.0 weight percent active ingredient and in certain embodiments contain 0.01 to 7.0 weight percent.

The present combinations can be applied to weeds or their locus by the use of conventional ground or aerial dusters,

sprayers, and granule applicators, by addition to irrigation water, and by other conventional means known to those skilled in the art.

The following examples illustrate the practice of the present invention in some of its embodiments but should not be construed as limiting the scope of the invention. Other embodiments will be apparent to one skilled in the art from consideration of the specification and examples. It is intended that the specification, including the examples, is considered exemplary only, without limiting the scope and spirit of the invention. The details of each example is not meant to limit the general principle and should not be seen to limit the teaching to the specifics of that example. For example, a detail from one example can when appropriate be combined with an experimental detail from a different example and be within the contemplated scope of the invention.

The examples below are to be seen as general guidelines as to how to conduct experiments that may be carried out to determine the optimum combination of active and inactive components. Any reference to specific compounds or experimental value is for illustrative purposes including how to evaluate a characteristic and not to display actual results achieved unless specifically stated.

EXAMPLES

**Example 1**

Evaluation of Postemergence Herbicidal Activity of Combinations - Glasshouse pot study against various Broad Leaf Weeds.
In each pot, plant 10 seeds of the specific weed (unless known low vigor, if so, then increase the number).The plants were grown in a greenhouse . The plants were employed for testing when they reached the stage as detailed in the tables below. Different combinations incorporating the herbicide halauxifen were applied post-emergence to pot sown Papaver rhoeas, Matricaria chamomilla, Stellaria media, Veronica persica, Cyanus segetum, Alopecurus myosuroides, and Lolium multiflorum in a glasshouse screen. Details of the Crop BBCH Scale are detailed below as are the pest stages at each application.

Treatments included the following compounds and or preparations:

ELEVORE™ - Halauxifen-methyl from Corteva™

VARRO™ - Thiencarbazone-methyl from Bayer CropScience

BOXER™ - florasulam SC from Corteva™

AG-D1-500 SC [Hurricane™]- Diflufenican from ADAMA

AG-B2-480 SC [Fox™ 480 SC] - Bifenox from ADAMA

ABAK™ - Pyroxsulam & cloquintocet-mexyl (C-m) from Dow Agrosciences Target

Pest Description

| **PEST** 1 | **ABREVIATION** PAPRH | **NAME** | **COMMON NAME** Corn Poppy |
|---|---|---|---|
| | | *Papaver rhoeas* | |
| 2 | MATCH | *Matricaria chamomilla* | Wild Chamomile |
| 3 | STEME | *Stella ria media* | Common Chickweed |
| 4 | VERPE | *Veronica persica* | Bird's-eye Speedwell |
| 5 | VIOAR | *Viola arvensis* | Field violet |
| 6 | CENCY | *Cyanus segetum* | Bachelor's- Button |
| 7 | CAPBP | *Capsella bursapastoris* | Shepherd's purse |
| **Timing:-** Post-Emergence (BBCH 11-12) of the weeds | | | |

TABLE A. The treatments

| Treatment No. | Code | Description |
|---|---|---|
| 1 | UC | UNTREATED - CONTROL |
| 2 | A1 | ELEVORE 0.0255 L/ha; VARRO 0.175 L/ha |
| 3 | A2 | ELEVORE 0.0365 L/ha; VARRO 0.25 L/ha |
| 4 | A3 | ELEVORE 0.0547 L/ha; VARRO 0.375 L/ha |
| 5 | A4 | ELEVORE 0.0547 L/ha; VARRO 0.175 L/ha |
| 6 | A5 | ELEVORE 0.0255 L/ha; VARRO 0.375 L/ha |
| 7 | AC-VB1a | ACTIVE CONTROL 1a |
| 8 | AC-VB1b | ACTIVE CONTROL 1b |
| 9 | AC-VB1c | ACTIVE CONTROL 1c |
| 10 | AC-VB1d | ACTIVE CONTROL 1d |
| 11 | AC-VB1e | ACTIVE CONTROL 1e |
| 12 | B1 | ELEVORE 0.0255 L/ha; AG-D1-500 SC 0.0875 L/ha |
| 13 | B2 | ELEVORE 0.0365 L/ha; AG-D1-500 SC 0.125 L/ha |
| 14 | B3 | ELEVORE 0.0547 L/ha; AG-D1-500 SC 0.1875 L/ha |
| 15 | B4 | ELEVORE 0.0547 L/ha; AG-D1-500 SC 0.0875 L/ha |
| 16 | B5 | ELEVORE 0.0255 L/ha; AG-D1-500 SC 0.1875 L/ha |
| 17 | C1 | ELEVORE 0.0255 L/ha; AG-B2-480 SC 0.525 L/ha |
| 18 | C2 | ELEVORE 0.0365 L/ha; AG-B2-480 SC 0.75 L/ha |
| 19 | C3 | ELEVORE 0.0547 L/ha; AG-B2-480 SC 1.125 L/ha |
| 20 | C4 | ELEVORE 0.0547 L/ha; AG-B2-480 SC 0.525 L/ha |
| 21 | C5 | ELEVORE 0.0255 L/ha; AG-B2-480 SC 1.125 L/ha |
| 22 | D1 | ELEVORE 0.0255 L/ha; ABAK 0.0875 kg/ha |
| 23 | D2 | ELEVORE 0.0365 L/ha; ABAK 0.125 kg/ha |
| 24 | D3 | ELEVORE 0.0547 L/ha; ABAK 0.1875 kg/ha |
| 25 | D4 | ELEVORE 0.0547 L/ha; ABAK 0.0875 kg/ha |
| 26 | D5 | ELEVORE 0.0255 L/ha; ABAK 0.1875 kg/ha |
| 27 | HF2a | ACTIVE CONTROL 2a |

TABLE B Treatment Details

| **Treatment No.** | **Treatment Name** | **Concentration** | **Application Rate** | **AI Rate** |
|---|---|---|---|---|
| 1 | CONTROL | | | |
| A1 | Halauxifen-methyl<br>Thiencarbazone-methyl | 68,5 GA/L SC 10 GA/L SC | 0,0255 L/ha<br>0,175 L/ha | 1,75 g A/ha<br>1,75 g A/ha |
| A2 | Halauxifen-methyl<br>Thiencarbazone-methyl | 68,5 GA/L SC 10 GA/L SC | 0,0365 L/ha<br>0,25 L/ha | 2,5 g A/ha<br>2,5 g A/ha |
| A3 | Halauxifen-methyl<br>Thiencarbazone-methyl | 68,5 GA/L SC<br>10 GA/L SC | 0,0547 L/ha<br>0,375 L/ha | 3,75 g A/ha<br>3,75 g A/ha |

| | | | | |
|---|---|---|---|---|
| A4 | Halauxifen-methyl<br>Thiencarbazone-methyl | 68,5 GA/L SC 10<br>GA/L SC | 0,0547 L/ha<br>0,175 L/ha | 3,75 g A/ha<br>1,75 g A/ha |
| A5 | Halauxifen-methyl<br>Thiencarbazone-methyl | 68,5 GA/L SC 10<br>GA/L SC | 0,0255 L/ha<br>0,375 L/ha | 1,75 g A/ha<br>3,75 g A/ha |
| B1 | Halauxifen-methyl<br>Diflufenican | 68,5 GA/L SC<br>500 GA/L SC | 0,0255 L/ha<br>0,0875 L/ha | 1,75 g A/ha<br>43,8 g A/ha |
| B2 | Halauxifen-methyl<br>Diflufenican | 68,5 GA/L SC<br>500 GA/L SC | 0,0365 L/ha<br>0,125 L/ha | 2,5 g A/ha<br>62,5 g A/ha |
| B3 | Halauxifen-methyl<br>Diflufenican | 68,5 GA/L SC<br>500 GA/L SC | 0,0547 L/ha<br>0,1875 L/ha | 3,75 g A/ha<br>94 g A/ha |
| B4 | Halauxifen-methyl<br>Diflufenican | 68,5 GA/L SC<br>500 GA/L SC | 0,0547 L/ha<br>0,0875 L/ha | 3,75 g A/ha<br>43,8 g A/ha |
| B5 | Halauxifen-methyl<br>Diflufenican | 68,5 GA/L SC<br>500 GA/L SC | 0,0255 L/ha<br>0,1875 L/ha | 1,75 g A/ha<br>94 g A/ha |
| C1 | Halauxifen-methyl<br>Bifenox | 68,5 GA/L SC<br>480 GA/L SC | 0,0255 L/ha<br>0,525 L/ha | 1,75 g A/ha<br>252 g A/ha |
| C2 | Halauxifen-methyl<br>Bifenox | 68,5 GA/L SC<br>480 GA/L SC | 0,0365 L/ha<br>0,75 L/ha | 2,5 g A/ha<br>360 g A/ha |
| C3 | Halauxifen-methyl<br>Bifenox | 68,5 GA/L SC<br>480 GA/L SC | 0,0547 L/ha<br>1,125 L/ha | 3,75 g A/ha<br>540 g A/ha |
| C4 | Halauxifen-methyl<br>Bifenox | 68,5 GA/L SC<br>480 GA/L SC | 0,0547 L/ha<br>0,525 L/ha | 3,75 g A/ha<br>252 g A/ha |
| C5 | Halauxifen-methyl<br>Bifenox | 68,5 GA/L SC<br>480 GA/L SC | 0,0255 L/ha<br>1,125 L/ha | 1,75 g A/ha<br>540 g A/ha |
| D1 | Halauxifen-methyl<br>Pyroxsulam & C-m | 68,5 GA/L SC<br>150 GA/KG WG | 0,0255 L/ha<br>0,0875 kg/ha | 1,75 g A/ha<br>13,1 g A/ha |
| D2 | Halauxifen-methyl | 68,5 GA/L SC | 0,0365 L/ha | 2,5 g A/ha |

(continued)

| | | | | |
|---|---|---|---|---|
| | Pyroxsulam & C-m | 150 GA/KG WG | 0,125 kg/ha | 18,8 g A/ha |
| D3 | Halauxifen-methyl<br>Pyroxsulam & C-m | 68,5 GA/L SC<br>150 GA/KG WG | 0,0547 L/ha<br>0,1875 kg/ha | 3,75 g A/ha<br>28 g A/ha |
| D4 | Halauxifen-methyl<br>Pyroxsulam & C-m | 68,5 GA/L SC<br>150 GA/KG WG | 0,0547 L/ha<br>0,0875 kg/ha | 3,75 g A/ha<br>13,1 g A/ha |
| D5 | Halauxifen-methyl<br>Pyroxsulam & C-m | 68,5 GA/L SC<br>150 GA/KG WG | 0,0255 L/ha<br>0,1875 kg/ha | 1,75 g A/ha<br>28 g A/ha |

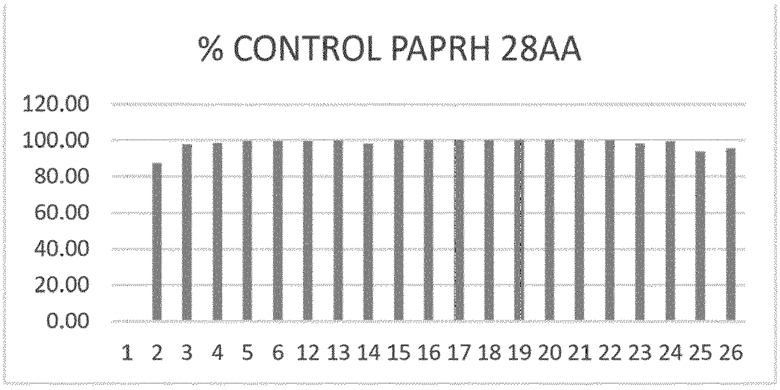


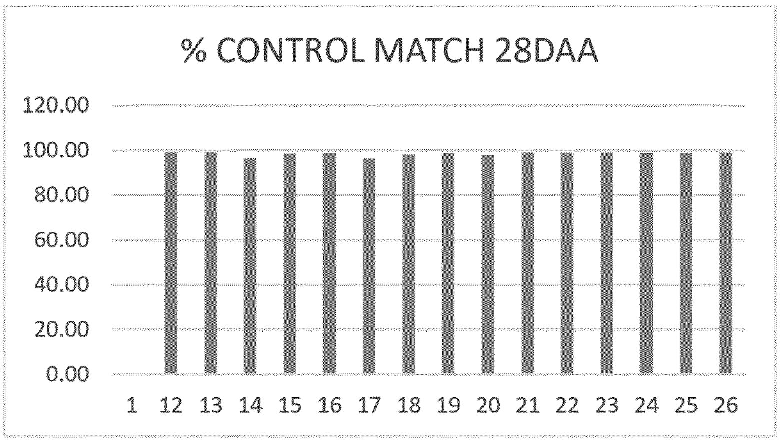

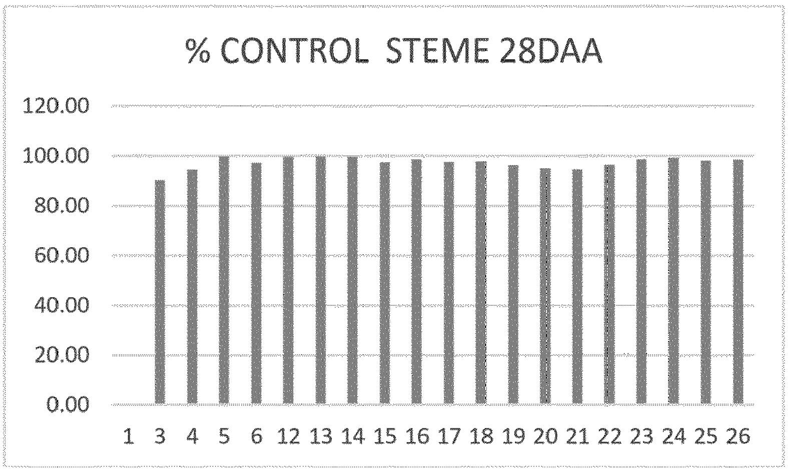


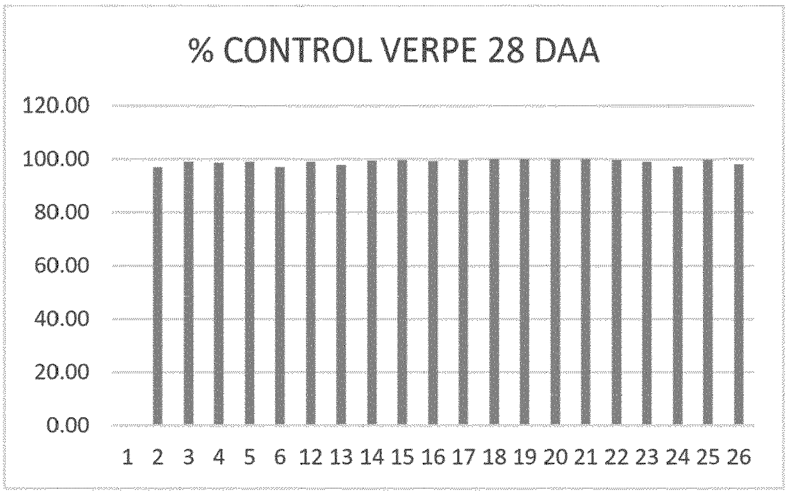


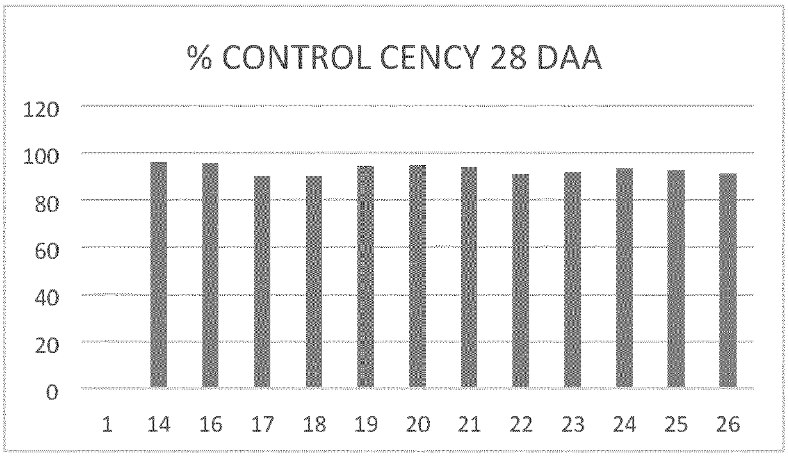


**Example 2** [Pinoxaden and Halauxifen Screening]

| | LOADING | | |
|---|---|---|---|
| Active Ingredient | A | B | C |

(continued)

| | LOADING | | |
|---|---|---|---|
| Pinoxaden | 30 | 45 | 60 |
| Halauxifen-methyl | 2.5 | 3.75 | 5 |

<u>Test Parameters</u>

| | |
|---|---|
| Crop | Winter Wheat |
| Zone | South Central |
| Test Environnent | Field |
| Pest | BL & GL Weeds |
| Application Type | Foliar |
| Application and assesment Timing | BBCH 25 - 31<br>BBCH 30 - 33<br>BBCH 37 - 39 |
| Minimum Water Rate L/ha | 200 |
| Maximum Water Rate L/ha | 400 |
| Minimum Pinoxaden rate g AI/ha | 30 |
| Maximum Pinoxaden rate g AI/ha | 60 |
| Minimum Halauxifen-methyl rate g AI/ha | 2.5 |
| Maximum Halauxifen-methyl rate g AI/ha | 5 |

| **Active Ingredients** | **Rate L/ha** | **Rate gai/ha** |
|---|---|---|
| Pinoxaden 55 g/l +<br>Halauxifen 68.5 g/l<br>Pinoxaden 55 g/l +<br>Halauxifen 68.5 g/l | 0.55 L/ha +<br>0.036 L/ha<br>0.82 L/ha +<br>0.055 L/ha | 30 gai + 2.5<br>gai<br>45 gai + 3.75<br>gai |
| Pinoxaden 55 g/l +<br>Halauxifen 68.5 g/l | 1.1 L/ha +<br>0.073 L/ha | 60 gai + 5 gai |
| Pinoxaden 55 g/l | 1.1 L/ha | 60 gai |
| Halauxifen 68.5 g/l | 0.073 L/ha | 5 gai |

BBCH 37-39 (Flag Leaf Emerging) Assessment
Even though Weeds were advanced at the application timing, Efficacy against Grass Leaf Weeds comparable if not better vs active reference. A noticeable benefit from combining the two actives in *Alopecurus myosuroides & Apera spica-venti.* A particular benefit was found against *Lolium multiflorum.*

In Grass Weeds application at BBCH 30-33 clear benefit in combining the two actives compared with solo applications and even better against active comparator in several cases with *Lolium multiflorum* and *Alopecurus myosuroides.* A clear dose response correlation.
Good efficacy, given the late stage of the Crop for ALOMY + LOLMU
A definite benefit can be seen from combining the two A.I.s
Dose response was seen with this combination No
phytotoxicity was observed.

## Example 3

Evaluation of Postemergence Herbicidal Activity of Halauxifen Combinations, postemergence Glasshouse pot study against various Grass Leaf Weeds & Broad Leaf Weeds

In each pot, plant 10 seeds of the specific weed (unless known low vigor, if so, then increase the number). The plants were grown in a greenhouse . The plants were employed for testing when they reached the stage as detailed in the tables below. Different combinations incorporating the herbicide halauxifen were applied postemergence to pot sown Alopecurus myosuroides, Lolium multifloru, Papaver rhoeas, Matricaria chamomilla, Stellaria media, Veronica persica and Cyanas segetum in a glasshouse screen. Details of the Crop BBCH Scale are detailed below.

Treatments included the following compounds and or preparations:

ELEVORE™ - Halauxifen-methyl from Corteva™
AXIAL PRO™ - Pinoxaden 55 g/l & cloquintocet-mexyl (C-m) 13.75 g/l & hexylene glycol (HG, methyl-2,4-pentanediol), from Syngenta.
ACTIVE CONTROL 1
ACTIVE CONTROL 2

Target Pest Description

| **PEST** 1 | **ABREVIATION** ALOMY, | **NAME** | **COMMON NAME** Blackgrass |
|---|---|---|---|
| | | *Alopecurus myosuroides* | |
| 2 | LOLMU | *Lolium multiflorum* | Bearded ryegrass |
| 3 | PAPRH | *Papaver rhoeas* | Corn Poppy |
| 4 | MATCH | *Matricaria chamomilla* | Wild Chamomile |
| 5 | STEME | *Stellaria media* | Common Chickweed |
| 6 | VERPE | *Veronica persica* | Bird's-eye speedwell |
| 8 | CENCY | *Cyanus segetum* | Bachelor's-button |
| **Timing:-** Post-Emergence (BBCH 11-12) of the weeds | | | |

TABLE A. The treatments

| Treatment No. | Code | Description |
|---|---|---|
| 1 | UC | UNTREATED - CONTROL |
| 2 | AC-VA1a | ACTIVE CONTROL 1a |
| 3 | AC-VA1b | ACTIVE CONTROL 1b |
| 4 | AC-VA1c | ACTIVE CONTROL 1c |
| 5 | AC-VA1d | ACTIVE CONTROL 1d |
| 6 | AC-VA1e | ACTIVE CONTROL 1e |
| 7 | AC-VA1f | ACTIVE CONTROL 1f |
| 8 | B1 | AXIAL PRO 0.2864 L/ha;ELEVORE 0.0255 L/ha |
| 9 | B2 | AXIAL PRO 0.4091 L/ha;ELEVORE 0.0365 L/ha |
| 10 | B3 | AXIAL PRO 0.6136 L/ha;ELEVORE 0.0547 L/ha |
| 11 | B4 | AXIAL PRO 0.6136 L/ha;ELEVORE 0.0547 L/ha |
| 12 | B5 | AXIAL PRO 0.2864 L/ha;ELEVORE 0.0255 L/ha |
| 13 | HF2a | ACTIVE CONTROL 2a |

(continued)

| Treatment No. | Treatment Name | Concentration | Application Rate | AI Rate |
|---|---|---|---|---|
| 1 | CONTROL | | | |
| AC-VA1a | ACTIVE CONTROL 1a | | | |
| B1 | Pinoxaden & C-m<br>Halauxifen-methyl | 68,75 GA/L EC<br>68,5 GA/L SC | 0,2864 L/ha<br>0,0255 L/ha | 19,7 g A/ha<br>1,75 g A/ha |
| B2 | Pinoxaden & C-m<br>Halauxifen-methyl | 68,75 GA/L EC<br>68,5 GA/L SC | 0,4091 L/ha<br>0,0365 L/ha | 28 g A/ha<br>2,5 g A/ha |
| B3 | Pinoxaden & C-m<br>Halauxifen-methyl | 68,75 GA/L EC<br>68,5 GA/L SC | 0,6136 L/ha<br>0,0547 L/ha | 42 g A/ha<br>3,75 g A/ha |
| B4 | Pinoxaden & C-m<br>Halauxifen-methyl | 68,75 GA/L EC<br>68,5 GA/L SC | 0,6136 L/ha<br>0,0547 L/ha | 42 g A/ha<br>3,75 g A/ha |
| B5 | Pinoxaden & C-m<br>Halauxifen-methyl | 68,75 GA/L EC<br>68,5 GA/L SC | 0,2864 L/ha<br>0,0255 L/ha | 19,7 g A/ha<br>1,75 g A/ha |
| HF2a | ACTIVE CONTROL 2a | | | |

Assessments:-

10-14, 21 & 28-35 Days after application perform % control of weeds efficacy assessments.

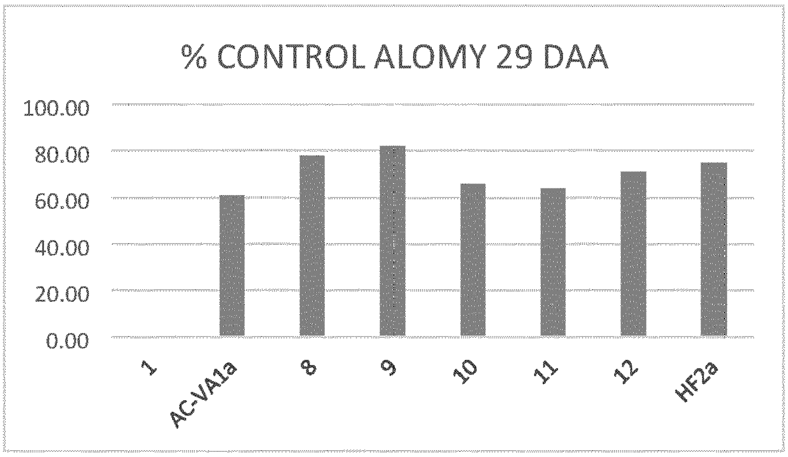

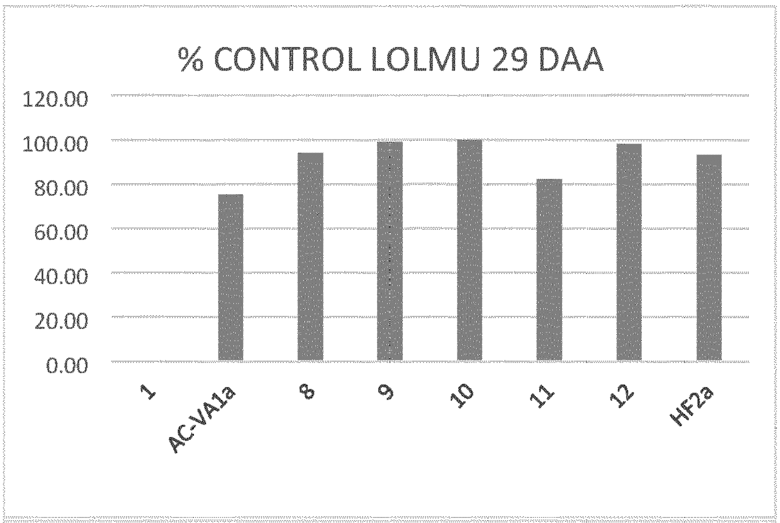
% CONTROL LOLMU 29 DAA
120.00
100.00
80.00
60.00
40.00
20.00
0.00
1
AC-VA1a
8
9
10
11
12
HF2a

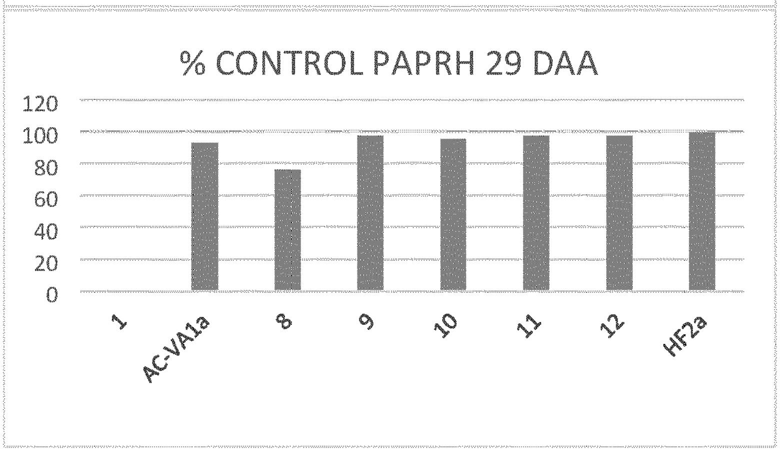
% CONTROL PAPRH 29 DAA
120
100
80
60
40
20
0
1
AC-VA1a
8
9
10
11
12
HF2a

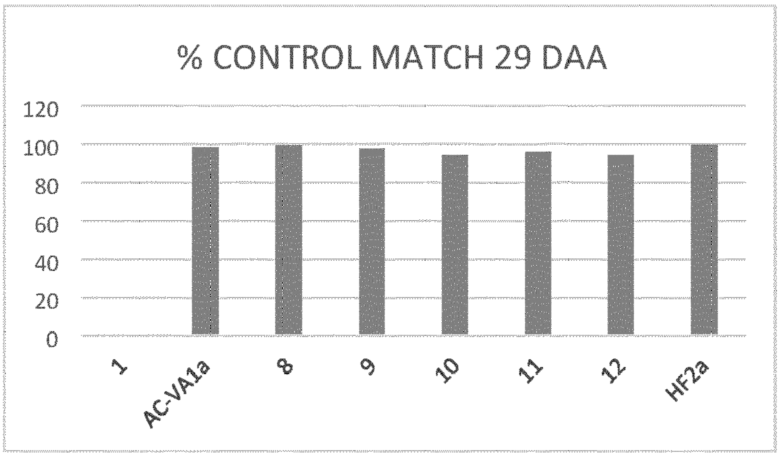
% CONTROL MATCH 29 DAA
120
100
80
60
40
20
0
1
AC-VA1a
8
9
10
11
12
HF2a

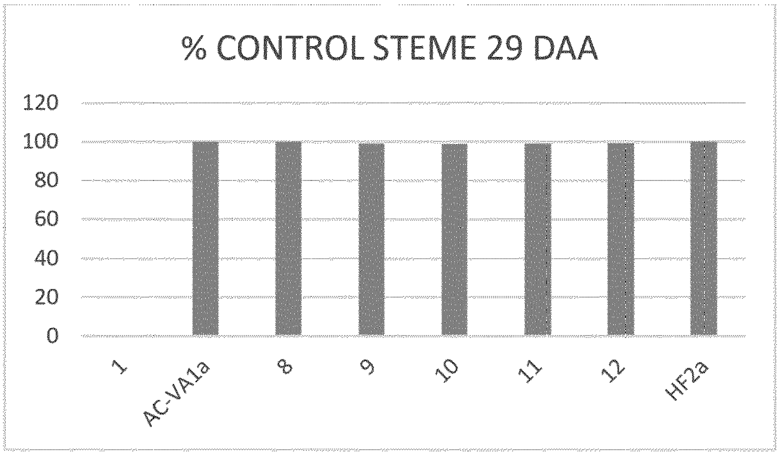


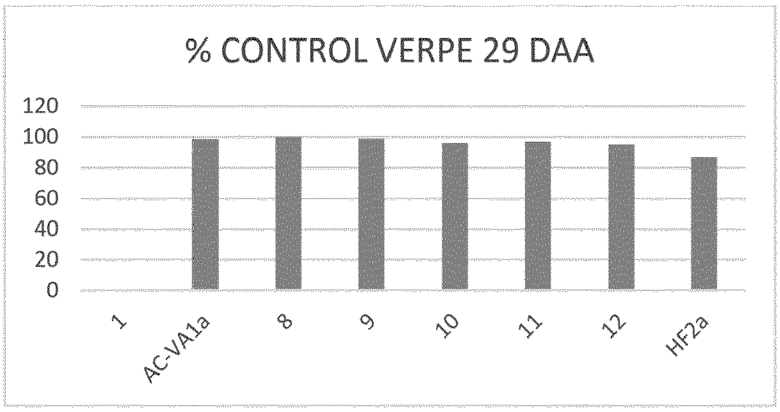


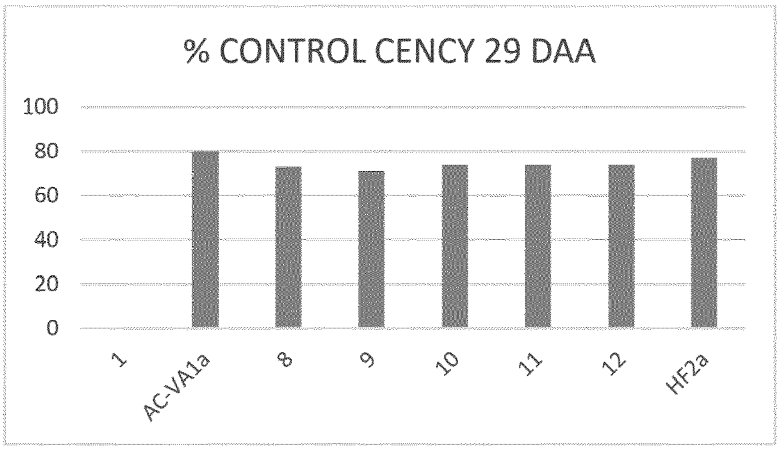


**Example 4** [Bifenox + Halauxifen Screening]

| | LOADING | | |
|---|---|---|---|
| Active Ingredient | A | B | C |
| Halauxifen-methyl | 2.5 | 3.75 | 5.0 |
| Bifenox | 360 | 540 | 720 |

Test Parameters

| | |
|---|---|
| Crop | Winter Wheat |
| Zone | South Central |
| Test Environnent | Field |
| Pest | BL Weeds |
| Application Type | Foliar |
| Application and assesment Timing | BBCH 25 - 31<br>BBCH 30 - 33<br>BBCH 37 - 39 |
| Minimum Water Rate L/ha | 200 |
| Maximum Water Rate L/ha | 400 |
| Minimum Bifenox rate g AI/ha | 360 |
| Maximum Bifenox rate g AI/ha | 720 |
| Minimum Halauxifen-methyl rate g AI/ha | 2.5 |
| Maximum Halauxifen-methyl rate g AI/ha | 5 |

| Active | Rate L/ha | gai/ha |
|---|---|---|
| Halauxifen 68.5 g/l + Bifenox 480 g/l | 0.036 L/ha + 0.75 L/ha | 2.5 gai + 360 gai |
| Halauxifen 68.5 g/l + Bifenox 480 g/l | 0.055 L/ha + 1.125 L/ha | 3.75 gai + 540 gai |
| Halauxifen 68.5 g/l + Bifenox 480 g/l | 0.073 L/ha + 1.5 L/ha | 5 gai + 720 gai |
| Halauxifen 68.5 g/l + Bifenox 480 g/l | 0.073 L/ha + 1.125 L/ha | 5 gai + 540 gai |

Application at BBCH 30 of crops

Assessment timing: Last timing - Early Summer (35-54)
Weeds: PAPRH; VIOAR; CAPBP; MATCH;STEME; POAAN

**Example 5** [Pyroxsulam + Halauxifen Screening]

| | LOADING | | |
|---|---|---|---|
| Active Ingredient | A | B | C |
| Halauxifen-methyl | 2.5 | 3.75 | 5 |
| Pyroxsulam | 9.375 | 14.06 | 18.75 |

Test Parameters

| | |
|---|---|
| Crop | Winter Wheat |
| Zone | South Central |
| Test Environnent | Field |
| Pest | BL Weeds |
| Application Type | Foliar |
| Application and assesment Timing | BBCH 25 - 31<br>BBCH 30 - 33<br>BBCH 37 - 39 |
| Minimum Water Rate L/ha | 200 |
| Maximum Water Rate L/ha | 400 |
| Minimum Bifenox rate g AI/ha | 9.75 |
| Maximum Bifenox rate g AI/ha | 18.75 |
| Minimum Halauxifen-methyl rate g AI/ha | 2.5 |
| Maximum Halauxifen-methyl rate g AI/ha | 5 |

| Active | Rate L/ha | ga/ha |
|---|---|---|
| Halauxifen 68.5 g/l + Pyroxsulam 75 g/l | 0.036 L/ha + 0.125 L/ha | 2.5 gai + 9.375 gai |
| Halauxifen 68.5 g/l + Pyroxsulam 75 g/l | 0.055 L/ha + 0.1875 L/ha | 3.75 gai + 14.06 gai |
| Halauxifen 68.5 g/l + Pyroxsulam 75 g/l | 0.073 L/ha + 0.25 L/ha | 5 gai + 18.75 gai |

Application at BBCH 30 - 31 of crops
Application at BBCH 31 - 65 of weeds
Weeds: PAPRH; VIOAR; CAPBP; MATCH;STEME; POAAN

The following numbered statements are part of the description:

1. A two-component herbicide comprising an herbicidally effective amount of a combination of

(i) at least one first herbicidal active ingredient of a component (a) selected from the group of a pyridine carboxylic acid of Compound (I)

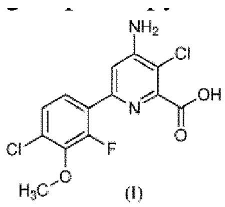

(I)

and agriculturally acceptable derivatives, including salts and esters thereof, and

(ii) a second herbicidal active ingredients component (b), comprising at least one herbicidal active ingredient

selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations thereof,

Wherein said two-component herbicide combination is herbicidally effective to provide control of unwanted vegetation in oilseed rape, sunflower, cereals, soy, tree and orchard crops.

2. The two-component herbicide of statement 1, wherein the amount of herbicidal active ingredient of component (a) and or, the amount of the herbicidal active ingredient of component (b) in the combination are more effective to control unwanted vegetation in oilseed rape, sunflower, cereals, soy, tree and orchard crops than when each herbicidal active ingredient of said component at the same amount is applied alone in the absence of other herbicidal active ingredients.

3. The two-component herbicide of any one of statements 1-2, wherein the amount of each herbicidal active ingredient of component (a) in the combination is less than the herbicidally effective amount of said herbicidal active ingredient of component (a) when said herbicidal active ingredient of component (a) is applied alone in the absence of other herbicidal active ingredients.

4. The two-component herbicide of any one of statements 1-3, wherein the amount of each herbicidal active ingredient of component (b) in the combination is less than the herbicidally effective amount of said herbicidal active ingredient of component (b) when said herbicidal active ingredient of component (b) is used alone.

5. The two-component herbicide of any one of statements 1-4, wherein the amount of each herbicidal active ingredient of component (a) and each herbicidal active ingredient of component (b) in the combination is less than the herbicidally effective amount of each of said herbicidal active ingredients of component (a) and component (b) when each of said herbicidal active ingredients is used alone.

6. The two-component herbicide combination of any one of statements 1-5, wherein said unwanted vegetation is any or all of Alopecurus myosuroides, Lolium multiflorum, Papaver rhoeas, Matricaria chamomilla, Stellaria media, Veronica persica, Viola arvensis, Cyanus segetum and Capsella bursa-pastoris, Alopecurus myosuroides, Lolium multiflorum, Papaver rhoeas, Matricaria chamomilla, Stellaria media, Veronica persica, Viola arvensis, Cyanus segetum and Capsella bursa-pastoris, Amaranthus spp., Chenopodium album, Conyza bonariensis, Conyza canadensis, Amsinckia intermedia, Calandrinia ciliate, Erodium cicutarium, Hordeum murinam, Ipomoea spp, Malva parviflora, Medicago polymorpha, Poa annua, Panicum capillare, Agropyron repens) or Setaria faberi.

7. The two-component herbicide of any one of statements 1-6 additionally comprising at least one herbicide safener.

8. The two-component herbicide of any one of statements 1-7 wherein the carboxylic acid equivalent weight ratio of the herbicidally active pyridine carboxylic acid herbicidally active ingredient Compound (I) of component (a), to the herbicidal active ingredients component (b) is between 10:1 and 1:500.

9. The two-component herbicide of any one of statements 1-8 wherein the carboxylic acid equivalent weight ratio of the herbicidally active pyridine carboxylic acid herbicidally active ingredient Compound (I) of component (a), to the herbicidal active ingredients component (b) is between 5:1 and 1:256.

10. A two-component herbicide comprising an herbicidally effective amount of the two-component herbicide combination of any one of statements 1-9 and at least one of, an agriculturally acceptable adjuvant, carrier or solvent.

11. A herbicidally effective amount of the two-component herbicide of any one of statements 1 - 10, wherein the combination comprises from about 5% to about 95% of the herbicidally effective amount of each herbicide active ingredient of component **(a)** and or, from about 5% to about 95% of the herbicidal effective amount of each herbicide active ingredient of component **(b)** co-herbicide.

12. The herbicidally effective amount of the of the two-component herbicide of statement 11, wherein the combination comprises a percentage of the herbicidal effective amount selected from the group consisting of, not less than 5%; about 10%; about 15%; about 20%; about 25%; about 30% about 35% about 40%; about 45%; about 50%; about

55%; about 60% about 65%; about 70%; about 75%; about 80% about 85%; about 90%, and less than 95% of the herbicidal effective amount of each herbicide active ingredient of component **(a)** and a percentage of the herbicidal effective amount selected from the group consisting of, not less than 5%; about 10%; about 15%; about 20%; about 25%; about 30% about 35% about 40%; about 45%; about 50%; about 55%; about 60% about 65%; about 70%; about 75%; about 80% about 85%; about 90% and less than 95% of the herbicidal effective amount of each herbicide active ingredient of component **(b)** co-herbicide.

13. The herbicidally effective amount of the of the two-component herbicide of any one of statements 11-12, wherein the combination comprises a percentage of the herbicidally effective amount selected from the group consisting of, not less than 35%; about 50%; and less than or equal to 75% of the herbicidally effective amount of each herbicide active ingredient of component **(a)** and a percentage of the herbicidally effective amount selected from the group consisting of, not less than 35%; about 50%; and less than or equal to 75%, of the herbicidally effective amount of each herbicide active ingredient of component **(b).**

14. A method for the effective control of weeds, undesired or undesirable, vegetation in oilseed rape, sunflower, cereals, soy trees and orchard crops, comprising applying a herbicidally effective amount of a combination of

I. at least one first herbicide ingredient component (a) selected from the group of a pyridine carboxylic acid of Compound (I)

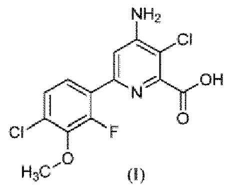

(I)

and agriculturally acceptable derivatives thereof, and

II. a second herbicide component (b) selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations thereof,

to the undesirable vegetation or the locus thereof at a rate of betweenlg/ha and 2400 g/ha based on the total amount of active ingredients in the combination, and wherein the carboxylic acid equivalent weight ratio of said first herbicide component (a) to said second herbicide component (b) is between 10:1 and 1:500.

15. The method of statement 14 wherein the second herbicide component (b) used, is applied at a rate between 4 g/ha and 1120 g/ha and the at least one first herbicide component (a) is applied at a rate between 1 g/ha and 80 g/ha, and wherein the carboxylic acid equivalent weight ratio of said first herbicide component (a) to said second herbicide component (b) is between 5:1 and 1:256.

16. A method for control of unwanted or undesirable vegetation in oilseed rape crops with a two component herbicide comprising applying a first component (a) of 4-amino-3-chloro6-(4-chloro-2-fluoro-3-methoxyphenyl)pyridine-2-carboxylic acid and or agriculturally acceptable derivative including esters and or or salts thereof and at least one second coherbicide component (b) selected from the group of Pendimethalin; Quinmerac; DMA-P (Dimethenamid-P); Metazachlor; and any and all combinations etc. thereof, to the unwanted or undesirable, vegetation or the locus thereof, wherein the carboxylic acid equivalent weight ratio of the applied 4-amino-3-chloro-6-(4-chloro-2-fluoro-3methoxyphenyl)pyridine-2- carboxylic acid or an agriculturally acceptable derivative including salt thereof, component to the applied at least one co-herbicide component (b)is of between 10:1 and 1:500.

17. The method of statement 16 wherein the carboxylic acid equivalent weight ratio of the applied first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the first component (a) is applied at a rate of between 0.5 g/ha and 160 g/ha carboxylic acid equivalent, and wherein the second component (b) is applied at a rate of between 0.5 g/ha and 2,240 g/ha.

18. The method of any one of statement 16 or statement 17, wherein the carboxylic acid equivalent weight ratio of the applied first component (a) to the applied, at least one co-herbicide component (b), is of between 5:1 and 1:256 and wherein said application of both components together is at an application rate of between 8 g/ha and 1200 g/ha based on the total amount of the carboxylic acid equivalent active ingredients of component (a) and the amounts of component (b), active ingredients in the combined application and wherein the first component (a) is applied at a rate of between, the carboxylic acid equivalent of 4 g/ha and 80 g/ha and wherein the second component (b) is applied at a rate of between 4 g/ha and 1120 g/ha.

19. A method for control of unwanted or undesirable vegetation in cereal crops which comprises applying a first component (a) of 4-amino-3-chloro-6-(4-chloro-2-fluoro-3methoxyphenyl)pyridine-2-carboxylic acid and or agriculturally acceptable esters and or salts thereof and at least one second co-herbicide component (b) selected from the group of Thiencarbazone-methyl (Thiencarbazone); Pyroxsulam; Bifenox; Diflufenican; Pinoxaden in acid and or enolate form; and any and all combinations etc. thereof to the unwanted or undesirable, vegetation or the locus thereof, wherein the weight ratio of the applied carboxylic acid equivalent of 4-amino-3-chloro-6-(4chloro-2-fluoro-3-methoxyphenyl)pyridine-2- carboxylic acid or an agriculturally acceptable ester or salt thereof, component (a) to the applied at least one co-herbicide component (b) is of between 10:1 and 1:500.

20. The method of statement 19 wherein the weight ratio of the carboxylic acid equivalent of applied first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the first component (a) is applied at a rate of between carboxylic acid equivalent of 0.5 g/ha and 160 g/ha, and wherein the second component (b) is applied at a rate of between 0.5 g/ha and 2,240 g/ha.

21. The method of any one of statement 19 or statement 20, wherein the carboxylic acid equivalent of weight ratio of the applied first component (a) to the applied, at least one co-herbicide component (b) is of between 5:1 and 1:256 and wherein said application of both components together is at an application rate of between 8 g/ha and 1200 g/ha based on the total amount of active ingredient components in the combined application and wherein the first component is applied at a rate of between carboxylic acid equivalent of 4 g/ha and 80 g/ha and wherein the second component is applied at a rate of between between 4 g/ha and 1120 g/ha.

22. A method for control of unwanted or undesirable vegetation in sunflower crops which comprises applying a first component (a) of 4-amino-3-chloro-6-(4-chloro-2-fluoro-3methoxyphenyl)pyridine-2-carboxylic acid and or agriculturally acceptable esters and or or salts thereof and at least one second co-herbicide component (b) selected from the group of Aclonifen; Imazamox; quizalofop; clethodim and any and all combinations etc. thereof to the unwanted or undesirable, vegetation or the locus thereof, wherein the weight ratio of the applied carboxylic acid equivalent of 4amino-3-chloro-6-(4-chloro-2-fluoro-3-methoxyphenyl)pyridine-2- carboxylic acid or an agriculturally acceptable ester or salt thereof, component (a) to the applied at least one co-herbicide component (b) is of between 10:1 and 1:500.

23. The method of statement 22 wherein the weight ratio of the applied carboxylic acid equivalent of first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the carboxylic acid equivalent of first component (a) is applied at a rate of between 0.5 g/ha and 160 g/ha, and wherein the second component (b) is applied at a rate of between 0.5 g/ha and 2,240 g/ha.

24. The method of any one of statement 22 or statement 23, wherein the weight ratio of the applied carboxylic acid equivalent of first component (a) to the applied, at least one co-herbicide component (b) is of between 5:1 and 1:256 and wherein said application of both components together is at an application rate of between 8 g/ha and 1200 g/ha based on the total amount of active ingredient components in the combined application and wherein the first component (a) is applied at a rate of between carboxylic acid equivalent of 4 g/ha and 80 g/ha and wherein the second component is applied at a rate of between 4 g/ha and 1120 g/ha.

25. A method for control of unwanted or undesirable vegetation in tree and orchard crops which comprises applying a first component (a) of 4-amino-3-chloro-6-(4-chloro-2fluoro-3-methoxyphenyl)pyridine-2-carboxylic acid and or agriculturally acceptable esters and or or salts thereof and at least one second co-herbicide component (b) selected from the group of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof, to the unwanted or undesirable, vegetation or the locus thereof, wherein the weight ratio of the applied carboxylic acid equivalent of 4-amino-3-chloro-6-(4-chloro-2-fluoro-3methoxyphenyl)pyridine-2- carboxylic acid or an agriculturally acceptable ester or salt thereof, component (a) to the applied at least one co-herbicide component (b) is of between 10:1 and 1:500.

26. The method of statement 25 wherein the weight ratio of carboxylic acid equivalent of the applied first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the first component (a) is applied at a rate of between carboxylic acid equivalent of 0.5 g/ha and 160 g/ha, and wherein the second component (b) is applied at a rate of between 0.5 g/ha and 2,240 g/ha.

27. The method of any one of statement 25 or statement 26, wherein the weight ratio of the applied carboxylic acid equivalent of first component (a) to the applied, at least one co-herbicide component is of between 5:1 and 1:256 and wherein said application of both components together is at an application rate of between 8 g/ha and 1200 g/ha based on the total amount of active ingredient components in the combined application and wherein the first component is applied at a rate of between carboxylic acid equivalent of 4 g/ha and 80 g/ha and wherein the second component is applied at a rate of between 4 g/ha and 1120 g/ha.

28. The method of any one of statements 25 to 27, wherein the crops comprise any or all of almond, apple, apricot, avocado, beechnut, Brazil nut, butternut, cashew, cherry, chestnut, chinquapin, citrus, crab apple, date, feijoa, fig, filbert, hickory nut, grapefruit, kiwi, lemon, lime, loquat, macadamia nut, mandarin, mayhaws, nectarine, olives, oranges (sweet and sour), peach, pear, pecan, persimmon, pistachio, plum, pome fruit, pomegranates, prune, quince, stone fruit, tangerine, tangelo, tree nuts, and walnut, rubber, oil palm, coffee and cacao.

29. The method of any one of statements 19 to 21, wherein the crops comprise any or all of wheat, barley, rye, corn, oats and sorghum.

30. A method for the control of weeds, undesired or undesirable vegetation in oilseed rape, sunflower, cereals, trees and orchard crops, comprising applying a herbicidally effective amount of a combination of at least

i. as first herbicide component (a), methyl 4-amino-3-chloro-6-(4-chloro-2-fluoro-3methoxyphenyl)pyridine-2-carboxylate, and

ii. a second herbicide component (b) selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;; and any and all combinations etc. thereof,
to the weeds, undesired or undesirable vegetation or the locus thereof, at a rate such that the amount of each or both of said first herbicide component (a) and said second herbicide component(b) individually is not an herbicidally effective amount when applied to said weeds, undesired or undesirable vegetation or the locus thereof in the absence of said other herbicide component.

31. The method of any one of statements 14 to 30 wherein the effective control is of any or all of, Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza *bonariensis*), Conyza canadensis,Amsinckia intermedia, Calandrinia ciliate, Erodium cicutarium, Malva parviflora, Medicago polymorpha, Poa annua, Panicum capillare, Agropyron repens and Setaria faberi.

32. A method for the effective control of weeds, undesired or undesirable, vegetation in cereals, comprising applying a herbicidally effective amount of a combination of at least one first herbicide component (a) selected from the group of a pyridine carboxylic acid of Compound (I) and agriculturally acceptable derivatives including salts and esters thereof, and a second herbicide component (b), bifenox to the undesirable vegetation or the locus thereof in a cereal crop setting, at a rate of between 1g/ha and 2400 g/ha based on the total amount of active ingredients in the

combination, and wherein the weight ratio of carboxylic acid equivalent of said first herbicide component (a) to said second herbicide component (b) is between 10:1 and 1:500.

33. The method of statement 32 wherein the second herbicide component (b) used, is applied at a rate between 4 g/ha and 1120 g/ha and the at least one first herbicide component (a) is applied at a rate between 1 g/ha and 80 g/ha, and wherein the weight ratio of the carboxylic acid equivalent of said first herbicide component (a) to said second herbicide component (b) is between 5:1 and 1:256.

34. The method of any one of statements 14 to 33 wherein first herbicide component (a) is applied at a rate between about 1.75 g/ha and about 3.75 g/ha and second herbicide component (b), is applied at rates selected from the group consisting essentially of,

i. thiencarbazone between about 1.75 g/ha and about 3.75 g/ha;
ii. diflufenican between about 43.75 g/ha and about 93.75 g/ha;
iii. bifenox between about 252 g/ha and about 540 g/ha;
iv. pyroxsulam between about 6.6 g/ha and about 14.1 g/ha;
v. pinoxaden between about 15.75 g/ha and about 33.75 g/ha;
vi. combinations of any or all of i, ii, iii, iv, and v.,
applied at a combined water volume rate of 200 L/ha.

35. The method of statement 34 wherein first herbicide component (a) is applied at a rate selected from the group, 1.75 g/ha; about 2.5 g/ha and about 3.75 g/ha and second herbicide component (b), is applied at rates selected from the group consisting essentially of,

i. thiencarbazone about 2.5 g/ha;
ii. diflufenican about 62.5 g/ha;
iii. bifenox about 360 g/ha;
iv. pyroxsulam about 9.4 g/ha
v. pinoxaden about 22.5 g/ha
vi. combinations of any or all of i., ii., iii., iv., and v.
applied at a combined water volume rate of 200 L/ha

36. The method of any one of statements 34 and 35 wherein either,

A. application of first herbicide component (a) applied at a rate between about 1.75 g/ha and about 3.75 g/ha in the absence of any of second herbicide component (b), or
B. application of second herbicide component (b) applied at a rate selected from the group consisting essentially of,

i. thiencarbazone between about 1.75 g/ha and about 3.75 g/ha;
ii. diflufenican between about 43.75 g/ha and about 93.75 g/ha;
iii. bifenox between about 252 g/ha and about 540 g/ha;
iv. pyroxsulam between about 6.6 g/ha and about 14.1 g/ha
v. pinoxaden between about 15.75 g/ha and about 33.75 g/ha in the absence of any of first herbicide component (a),

is not sufficiently herbicidally effective to control said weeds, undesired or undesirable, vegetation.

37. A two-component herbicide of any one of statements 1-13, or a method of any one of statements 14-36, wherein the agriculturally acceptable derivative of pyridine carboxylic acid of Compound (I) is methyl 4-amino-3-chloro-6-(4-chloro-2-fluoro-3methoxyphenyl)pyridine-2-carboxylate, and wherein the carboxylic acid equivalent weight of methyl 4-amino-3-chloro-6-(4-chloro-2-fluoro-3-methoxyphenyl)pyridine2-carboxylate is 345 g/mol.

38. A two-component herbicide comprising an herbicidally effective amount of a combination of

i. A first herbicidal active ingredient component (a) comprising methyl 4amino-3-chloro-6-(4-chloro-2-fluoro-3-methoxyphenyl)pyridine-2carboxylate as herbicide active ingredient, and
ii. a second herbicidal active ingredients component (b), comprising at least one herbicidal active ingredient

selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations thereof,

wherein each active herbicide of component (a) of said two-component herbicide combination is herbicidally effective to provide control of unwanted vegetation in oilseed rape, sunflower, cereals, soy, tree and orchard crops.

39. A two-component herbicide comprising an herbicidally effective amount of a combination of

i. less than a herbicidally effective amount of methyl 4-amino-3-chloro-6-(4chloro-2-fluoro-3-methoxyphenyl)pyridine-2-carboxylate as component (a), and
ii. a second herbicidal active ingredients component (b), comprising less than the herbicidally effective amount of at least one herbicidal active ingredient selected from the group consisting of, Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations thereof,

wherein said two-component herbicide combination is herbicidally effective to provide control of unwanted vegetation in oilseed rape, sunflower, cereals, soy, tree and orchard crops.

40. A two-component herbicide of any one of statements 1-13, or a method of any one of statements 14-36, wherein herbicide ingredient component (a) and component (b) are synergistically herbicidal in combination application, and wherein each of said component (a) and component (b) are individually less than a herbicidally effective when applied in the absence of said other component.

41. The two-component herbicide of Statement 7 wherein the at least one herbicide safener is selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

42. The method of any one of statements 14, 16, 19, 22, 25, 30, or 32 wherein said applying additionally comprises applying at least one herbicide safener.

43. The method of Statement 42 wherein the at least one herbicide safener is selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

44. A two-component herbicide of any one of statements 1-13, 40-41, or a method of any one of statements 14-39, 42-43, wherein component (a) and component (b) comprise compositions of component (a) and component (b).

45. The two-component herbicide of any one of statements 1-13, 40-41, or a method of any one of statements 14-39, 42-43, wherein component (a) and component (b) comprise a composition comprising a combination of component (a) and component (b).

46. Compositions of any one of statements 44-45 further comprising at least one herbicide safener selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

47. The two-component herbicide of statement 41, the method of any one of statements 42-43 or compositions of statement 46, wherein the safener is selected from the group consisting of Cloquintocet; Isoxadifen; Mefenpyr and

all effective combinations thereof, preferably selected from Cloquintocet mexyl; Isoxadifen-ethyl; and Mefenpyr-diethyl.

48. Compositions of any one of statements 44-45 further comprising additive comprising at least one of carrier, safener, adjuvant, surfactant, pH modifying ingredient, base or acid, formulation aid or combinations of several or all thereof.

49. A combination comprising Halauxifen, Aminopyralid, at least one base and at least one additive selected from carrier, safener, adjuvant, surfactants, pH modifying ingredient, formulation aids or combinations thereof.

50. A combination comprising Halauxifen preferably, Halauxifen-methyl), and

i Clopyralid, or
ii Aminopyralid, or
iii Picloram, or
iv Quinclorac, or
v Tribenuron,

in combination with a safener, preferably selected from Cloquintocet, Mefenpyr, and Isoxadifen, more preferably selected from Cloquintocet-mexyl; Isoxadifen-ethyl; and Mefenpyr-diethyl.

51. Compositions of any one of statements 44-45, wherein the content of active ingredients in said composition comprise a percentage of between X - Y, wherein

X is selected from the group consisting of, about 0.1%; 0.5%; 1%; 1.5%; 2%; 2.5%; 3%; 3.5%; 4%; 4.5%; 5%, and Y is selected from the group consisting of, about 90%; 93%; 94%; 95%; 97%; 98%; and 99%,

based on the total weight of the composition.

## Claims

**1.** A two-component herbicide comprising an herbicidally effective amount of a combination of

(i) at least one first herbicidal active ingredient of a component (a) selected from the group of a pyridine carboxylic acid of Compound (I)

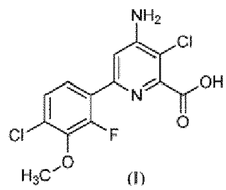

(I)

and agriculturally acceptable derivatives, including salts and esters thereof, and
(ii) a second herbicidal active ingredients component (b), comprising at least one herbicidal active ingredient selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations thereof.

Wherein said two-component herbicide combination is herbicidally effective to provide control of unwanted vegetation in oilseed rape, sunflower, cereals, soy, tree and orchard crops.

**2.** The two-component herbicide of claim 1, wherein the amount of herbicidal active ingredient of component (a) and or, the amount of the herbicidal active ingredient of component (b) in the combination are more effective to control unwanted vegetation in oilseed rape, sunflower, cereals, soy, tree and orchard crops than when each herbicidal

active ingredient of said component at the same amount is applied alone in the absence of other herbicidal active ingredients.

3. The two-component herbicide of any one of claims 1-2, wherein the amount of each herbicidal active ingredient of component (a) in the combination is less than the herbicidally effective amount of said herbicidal active ingredient of component (a) when said herbicidal active ingredient of component (a) is applied alone in the absence of other herbicidal active ingredients.

4. The two-component herbicide of any one of claims 1-3, wherein the amount of each herbicidal active ingredient of component (b) in the combination is less than the herbicidally effective amount of said herbicidal active ingredient of component (b) when said herbicidal active ingredient of component (b) is used alone.

5. The two-component herbicide of any one of claims 1-4, wherein the amount of each herbicidal active ingredient of component (a) and each herbicidal active ingredient of component (b) in the combination is less than the herbicidally effective amount of each of said herbicidal active ingredients of component (a) and component (b) when each of said herbicidal active ingredients is used alone.

6. The two-component herbicide combination of any one of Claim 1-5, wherein said unwanted vegetation is any or all of Alopecurus myosuroides, Lolium multiflorum, Papaver rhoeas, Matricaria chamomilla, Stellaria media, Veronica persica, Viola arvensis, Cyanus segetum and Capsella bursa-pastoris, Alopecurus myosuroides, Lolium multiflorum, Papaver rhoeas, Matricaria chamomilla, Stellaria media, Veronica persica, Viola arvensis, Cyanus segetum and Capsella bursa-pastoris, Amaranthus spp., Chenopodium album, Conyza bonariensis, Conyza canadensis, Amsinckia intermedia, Calandrinia ciliate, Erodium cicutarium, Hordeum murinam, Ipomoea spp, Malva parviflora, Medicago polymorpha, Poa annua, Panicum capillare, Agropyron repens) or Setaria faberi.

7. The two-component herbicide of any one of Claims 1-6 additionally comprising at least one herbicide safener.

8. The two-component herbicide of any one of Claims 1-7 wherein the carboxylic acid equivalent weight ratio of the herbicidally active pyridine carboxylic acid herbicidally active ingredient Compound (I) of component (a), to the herbicidal active ingredients component (b) is between 10:1 and 1:500.

9. The two-component herbicide of any one of Claims 1-8 wherein the carboxylic acid equivalent weight ratio of the herbicidally active pyridine carboxylic acid herbicidally active ingredient Compound (I) of component (a), to the herbicidal active ingredients component (b) is between 5:1 and 1:256.

10. A two-component herbicide comprising an herbicidally effective amount of the two-component herbicide combination of any one of Claims 1-9 and at least one of, an agriculturally acceptable adjuvant, carrier or solvent.

11. A herbicidally effective amount of the two-component herbicide of any one of claims 1 - 10, wherein the combination comprises from about 5% to about 95% of the herbicidally effective amount of each herbicide active ingredient of component (a) and or, from about 5% to about 95% of the herbicidal effective amount of each herbicide active ingredient of component (b) co-herbicide.

12. The herbicidally effective amount of the of the two-component herbicide of claim 11, wherein the combination comprises a percentage of the herbicidal effective amount selected from the group consisting of, not less than 5%; about 10%; about 15%; about 20%; about 25%; about 30% about 35% about 40%; about 45%; about 50%; about 55%; about 60% about 65%; about 70%; about 75%; about 80% about 85%; about 90%, and less than 95% of the herbicidal effective amount of each herbicide active ingredient of component (a) and a percentage of the herbicidal effective amount selected from the group consisting of, not less than 5%; about 10%; about 15%; about 20%; about 25%; about 30% about 35% about 40%; about 45%; about 50%; about 55%; about 60% about 65%; about 70%; about 75%; about 80% about 85%; about 90% and less than 95% of the herbicidal effective amount of each herbicide active ingredient of component (b) co-herbicide.

13. The herbicidally effective amount of the of the two-component herbicide of any one of claims 11-12, wherein the combination comprises a percentage of the herbicidally effective amount selected from the group consisting of, not less than 35%; about 50%; and less than or equal to 75% of the herbicidally effective amount of each herbicide active ingredient of component (a) and a percentage of the herbicidally effective amount selected from the group consisting of, not less than 35%; about 50%; and less than or equal to 75%, of the herbicidally effective amount of

each herbicide active ingredient of component (b).

**14.** A method for the effective control of weeds, undesired or undesirable, vegetation in oilseed rape, sunflower, cereals, soy trees or orchard crops, comprising applying a herbicidally effective amount of a combination of

I. at least one first herbicide ingredient component (a) selected from the group of a pyridine carboxylic acid of Compound (I)

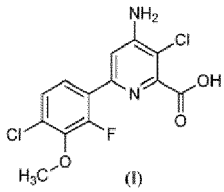

(I)

and agriculturally acceptable derivatives thereof, and
II. a second herbicide component (b) selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations thereof,

to the undesirable vegetation or the locus thereof at a rate of betweenlg/ha and 2400 g/ha based on the total amount of active ingredients in the combination, and wherein the carboxylic acid equivalent weight ratio of said first herbicide component (a) to said second herbicide component (b) is between 10:1 and 1:500.

**15.** The method of claim 14 wherein the second herbicide component (b) used, is applied at a rate between 4 g/ha and 1120 g/ha and the at least one first herbicide component (a) is applied at a rate between 1 g/ha and 80 g/ha, and wherein the carboxylic acid equivalent weight ratio of said first herbicide component (a) to said second herbicide component (b) is between 5:1 and 1:256.

**16.** A method for control of unwanted or undesirable vegetation in oilseed rape crops with a two component herbicide comprising applying a first component (a) of 4-amino-3-chloro6-(4-chloro-2-fluoro-3-methoxyphenyl)pyridine-2-carboxylic acid and or agriculturally acceptable derivative including esters and or or salts thereof and at least one second coherbicide component (b) selected from the group of Pendimethalin; Quinmerac; DMA-P (Dimethenamid-P); Metazachlor; and any and all combinations etc. thereof, to the unwanted or undesirable, vegetation or the locus thereof, wherein the carboxylic acid equivalent weight ratio of the applied 4-amino-3-chloro-6-(4-chloro-2-fluoro-3methoxyphenyl)pyridine-2- carboxylic acid or an agriculturally acceptable derivative including salt thereof, component to the applied at least one co-herbicide component (b)is of between 10:1 and 1:500.

**17.** The method of claim 16 wherein the carboxylic acid equivalent weight ratio of the applied first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the first component (a) is applied at a rate of between 0.5 g/ha and 160 g/ha carboxylic acid equivalent, and wherein the second component (b) is applied at a rate of between 0.5 g/ha and 2,240 g/ha.

**18.** The method of any one of claim 16 or claim 17, wherein the carboxylic acid equivalent weight ratio of the applied first component (a) to the applied, at least one co-herbicide component (b), is of between 5:1 and 1:256 and wherein said application of both components together is at an application rate of between 8 g/ha and 1200 g/ha based on the total amount of the carboxylic acid equivalent active ingredients of component (a) and the amounts of component (b), active ingredients in the combined application and wherein the first component (a) is applied at a rate of between, the carboxylic acid equivalent of 4 g/ha and 80 g/ha and wherein the second component (b) is applied at a rate of between 4 g/ha and 1120 g/ha.

**19.** A method for control of unwanted or undesirable vegetation in cereal crops which comprises applying a first component (a) of 4-amino-3-chloro-6-(4-chloro-2-fluoro-3methoxyphenyl)pyridine-2-carboxylic acid and or agriculturally

acceptable esters and or salts thereof and at least one second co-herbicide component (b) selected from the group of Thiencarbazone-methyl (Thiencarbazone); Pyroxsulam; Bifenox; Diflufenican; Pinoxaden in acid and or enolate form; and any and all combinations etc. thereof to the unwanted or undesirable, vegetation or the locus thereof, wherein the weight ratio of the applied carboxylic acid equivalent of 4-amino-3-chloro-6-(4chloro-2-fluoro-3-methoxyphenyl)pyridine-2- carboxylic acid or an agriculturally acceptable ester or salt thereof, component (a) to the applied at least one co-herbicide component (b) is of between 10:1 and 1:500.

**20.** The method of claim 19 wherein the weight ratio of the carboxylic acid equivalent of applied first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the first component (a) is applied at a rate of between carboxylic acid equivalent of 0.5 g/ha and 160 g/ha, and wherein the second component (b) is applied at a rate of between 0.5 g/ha and 2,240 g/ha.

**21.** The method of any one of claim 19 or claim 20, wherein the carboxylic acid equivalent of weight ratio of the applied first component (a) to the applied, at least one co-herbicide component (b) is of between 5:1 and 1:256 and wherein said application of both components together is at an application rate of between 8 g/ha and 1200 g/ha based on the total amount of active ingredient components in the combined application and wherein the first component is applied at a rate of between carboxylic acid equivalent of 4 g/ha and 80 g/ha and wherein the second component is applied at a rate of between between 4 g/ha and 1120 g/ha.

**22.** A method for control of unwanted or undesirable vegetation in sunflower crops which comprises applying a first component (a) of 4-amino-3-chloro-6-(4-chloro-2-fluoro-3methoxyphenyl)pyridine-2-carboxylic acid and or agriculturally acceptable esters and or or salts thereof and at least one second co-herbicide component (b) selected from the group of Aclonifen; Imazamox; quizalofop; clethodim and any and all combinations etc. thereof to the unwanted or undesirable, vegetation or the locus thereof, wherein the weight ratio of the applied carboxylic acid equivalent of 4amino-3-chloro-6-(4-chloro-2-fluoro-3-methoxyphenyl)pyridine-2- carboxylic acid or an agriculturally acceptable ester or salt thereof, component (a) to the applied at least one co-herbicide component (b) is of between 10:1 and 1:500.

**23.** The method of claim 22 wherein the weight ratio of the applied carboxylic acid equivalent of first component (a) to the applied, at least one co-herbicide component (b) is of between 5:1 and 1:256 and wherein said application is at an application rate of between 1 g/ha and 2400 g/ha based on the total amount of active ingredient components in the combined application and wherein the carboxylic acid equivalent of first component (a) is applied at a rate of between 0.5 g/ha and 160 g/ha, and wherein the second component (b) is applied at a rate of between 0.5 g/ha and 2,240 g/ha.

**24.** The method of any one of claim 22 or claim 23, wherein the weight ratio of the applied carboxylic acid equivalent of first component (a) to the applied, at least one co-herbicide component (b) is of between 5:1 and 1:256 and wherein said application of both components together is at an application rate of between 8 g/ha and 1200 g/ha based on the total amount of active ingredient components in the combined application and wherein the first component (a) is applied at a rate of between carboxylic acid equivalent of 4 g/ha and 80 g/ha and wherein the second component is applied at a rate of between 4 g/ha and 1120 g/ha.

**25.** A method for control of unwanted or undesirable vegetation in tree and orchard crops which comprises applying a first component (a) of 4-amino-3-chloro-6-(4-chloro-2fluoro-3-methoxyphenyl)pyridine-2-carboxylic acid and or agriculturally acceptable esters and or or salts thereof and at least one second co-herbicide component (b) selected from the group of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate;and any and all combinations etc. thereof, to the unwanted or undesirable, vegetation or the locus thereof, wherein the weight ratio of the applied carboxylic acid equivalent of 4-amino-3-chloro-6-(4-chloro-2-fluoro-3methoxyphenyl)pyridine-2- carboxylic acid or an agriculturally acceptable ester or salt thereof, component (a) to the applied at least one co-herbicide component (b) is of between 10:1 and 1:500.

**26.** The method of claim 25 wherein the weight ratio of carboxylic acid equivalent of the applied first component (a) to the applied, at least one co-herbicide component (b) is of between 5:1 and 1:256 and wherein said application is at an application rate of between 1 g/ha and 2400 g/ha based on the total amount of active ingredient components in

the combined application and wherein the first component (a) is applied at a rate of between carboxylic acid equivalent of 0.5 g/ha and 160 g/ha, and wherein the second component (b) is applied at a rate of between 0.5 g/ha and 2,240 g/ha.

**27.** The method of any one of claim 25 or claim 26, wherein the weight ratio of the applied carboxylic acid equivalent of first component (a) to the applied, at least one co-herbicide component is of between 5:1 and 1:256 and wherein said application of both components together is at an application rate of between 8 g/ha and 1200 g/ha based on the total amount of active ingredient components in the combined application and wherein the first component is applied at a rate of between carboxylic acid equivalent of 4 g/ha and 80 g/ha and wherein the second component is applied at a rate of between 4 g/ha and 1120 g/ha.

**28.** The method of any one of claims 25 to 27, wherein the crops comprise any or all of almond, apple, apricot, avocado, beechnut, Brazil nut, butternut, cashew, cherry, chestnut, chinquapin, citrus, crab apple, date, feijoa, fig, filbert, hickory nut, grapefruit, kiwi, lemon, lime, loquat, macadamia nut, mandarin, mayhaws, nectarine, olives, oranges (sweet and sour), peach, pear, pecan, persimmon, pistachio, plum, pome fruit, pomegranates, prune, quince, stone fruit, tangerine, tangelo, tree nuts, and walnut, rubber, oil palm, coffee and cacao.

**29.** The method of any one of claims 19 to 21, wherein the crops comprise any or all of wheat, barley, rye, corn, oats and sorghum.

**30.** A method for the control of weeds, undesired or undesirable vegetation in oilseed rape, sunflower, cereals, trees and orchard crops, comprising applying a herbicidally effective amount of a combination of at least

a. as first herbicide component (a), methyl 4-amino-3-chloro-6-(4-chloro-2-fluoro-3methoxyphenyl)pyridine-2-carboxylate, and
b. a second herbicide component (b) selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations etc. thereof,

to the weeds, undesired or undesirable vegetation or the locus thereof, at a rate such that the amount of each or both of said first herbicide component (a) and said second herbicide component(b) individually is not an herbicidally effective amount when applied to said weeds, undesired or undesirable vegetation or the locus thereof in the absence of said other herbicide component.

**31.** The method of any one of claims 14 to 30 wherein the effective control is of any or all of, Alopecurus myosuroides, Lolium multiflorum, Papaver rhoeas, Matricaria chamomilla, Stellaria media, Veronica persica, Viola arvensis, Cyanus segetum, Capsella bursa-pastoris, Galium, Lamium, Kochia, Amaranthus, Aeschynomene, Sesbania, Monochoria, Cyperus Schoenoplectus, Chenopodium album, Conyza bonariensis), Conyza canadensis,Amsinckia intermedia, Calandrinia ciliate, Erodium cicutarium, Malva parviflora, Medicago polymorpha, Poa annua, Panicum capillare, Agropyron repens and Setaria faberi.

**32.** A method for the effective control of weeds, undesired or undesirable, vegetation in cereals, comprising applying a herbicidally effective amount of a combination of at least one first herbicide component (a) selected from the group of a pyridine carboxylic acid of Compound (I) and agriculturally acceptable derivatives including salts and esters thereof, and a second herbicide component (b), bifenox to the undesirable vegetation or the locus thereof in a cereal crop setting, at a rate of between 1g/ha and 2400 g/ha based on the total amount of active ingredients in the combination, and wherein the weight ratio of carboxylic acid equivalent of said first herbicide component (a) to said second herbicide component (b) is between 10:1 and 1:500.

**33.** The method of claim 32 wherein the second herbicide component (b) used, is applied at a rate between 4 g/ha and 1120 g/ha and the at least one first herbicide component (a) is applied at a rate between 1 g/ha and 80 g/ha, and wherein the weight ratio of the carboxylic acid equivalent of said first herbicide component (a) to said second herbicide component (b) is between 5:1 and 1:256.

**34.** The method of any one of claims 14 to 33 wherein first herbicide component (a) is applied at a rate between about 1.75 g/ha and about 3.75 g/ha and second herbicide component (b), is applied at rates selected from the group

consisting essentially of,

i. thiencarbazone between about 1.75 g/ha and about 3.75 g/ha;
ii. diflufenican between about 43.75 g/ha and about 93.75 g/ha;
iii. bifenox between about 252 g/ha and about 540 g/ha;
iv. pyroxsulam between about 6.6 g/ha and about 14.1 g/ha;
v. pinoxaden between about 15.75 g/ha and about 33.75 g/ha;
vi. combinations of any or all of i, ii, iii, iv, and v.,

applied at a combined water volume rate of 200 L/ha.

**35.** The method of claim 34 wherein first herbicide component (a) is applied at a rate selected from the group, 1.75 g/ha; about 2.5 g/ha and about 3.75 g/ha and second herbicide component (b), is applied at rates selected from the group consisting essentially of,

i. thiencarbazone about 2.5 g/ha;
ii. diflufenican about 62.5 g/ha;
iii. bifenox about 360 g/ha;
iv. pyroxsulam about 9.4 g/ha;
v. pinoxaden about 22.5 g/ha; and
vi. combinations of any or all of i., ii., iii., iv., and v.

applied at a combined water volume rate of 200 L/ha

**36.** The method of any one of claims 34 and 35 wherein either

A. application of first herbicide component (a) applied at a rate between about 1.75 g/ha and about 3.75 g/ha in the absence of any of second herbicide component (b), or
B. application of second herbicide component (b) applied at a rate selected from the group consisting essentially of,

i. thiencarbazone between about 1.75 g/ha and about 3.75 g/ha;
ii. diflufenican between about 43.75 g/ha and about 93.75 g/ha;
iv. bifenox between about 252 g/ha and about 540 g/ha;
v. pyroxsulam between about 6.6 g/ha and about 14.1 g/ha; and
vi. pinoxaden between about 15.75 g/ha and about 33.75 g/ha,
in the absence of any of first herbicide component (a),

is not sufficiently herbicidally effective to control said weeds, undesired or undesirable, vegetation.

**37.** A two-component herbicide of any one of claims 1-13, or a method of any one of claims 14-36, wherein the agriculturally acceptable derivative of pyridine carboxylic acid of Compound (I) is methyl 4-amino-3-chloro-6-(4-chloro-2-fluoro-3methoxyphenyl)pyridine-2-carboxylate, and wherein the carboxylic acid equivalent weight of methyl 4-amino-3-chloro-6-(4-chloro-2-fluoro-3-methoxyphenyl)pyridine2-carboxylate is 345 g/mol.

**38.** A two-component herbicide comprising an herbicidally effective amount of a combination of

i. A first herbicidal active ingredient component (a) comprising methyl 4amino-3-chloro-6-(4-chloro-2-fluoro-3-methoxyphenyl)pyridine-2carboxylate as herbicide active ingredient, and
ii. a second herbicidal active ingredients component (b), comprising at least one herbicidal active ingredient selected from the group consisting of Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate; and any and all combinations thereof,

wherein each active herbicide of component (a) of said two-component herbicide combination is individually less than herbicidally effective to provide control of unwanted vegetation in oilseed rape, sunflower, cereals, soy, tree

and orchard crops.

**39.** A two-component herbicide comprising an herbicidally effective amount of a combination of

i. less than a herbicidally effective amount of methyl 4-amino-3-chloro-6-(4chloro-2-fluoro-3-methoxyphenyl)pyridine-2-carboxylate as component (a), and
ii. a second herbicidal active ingredients component (b), comprising less than the herbicidally effective amount of at least one herbicidal active ingredient selected from the group consisting of, Thiencarbazone-methyl (Thiencarbazone); Pyroxsulam; Bifenox; Diflufenican; Pinoxaden (including Pinoxaden acid and enolate form thereof); Pendimethalin; Quinmerac; DMA-P (Dimethenamid-P); Metazachlor; Aclonifen; Imazamox Aminopyralid; Quizalofop; Clethodim; Triclopyr; Saflufenacil; Paraquat; Picloram; Clopyralid; Quinclorac; Tribenuron; Glyphosate and any and all combinations thereof,

wherein said two-component herbicide combination is herbicidally effective to provide control of unwanted vegetation in oilseed rape, sunflower, cereals, soy, tree and orchard crops.

**40.** A two-component herbicide of any one of claims 1-13, or a method of any one of claims 14-36, wherein herbicide ingredient component (a) and component (b) are synergistically herbicidal in combination application, and wherein each of said component (a) and component (b) are individually less than a herbicidally effective when applied in the absence of said other component.

**41.** The two-component herbicide of Claim 7 wherein the at least one herbicide safener is selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

**42.** The method of any one of claims 14, 16, 19, 22, 25, 30, or 32 wherein said applying additionally comprises applying at least one herbicide safener.

**43.** The method of Claim 42 wherein the at least one herbicide safener is selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

**44.** A two-component herbicide of any one of claims 1-13, 40-41, or a method of any one of claims 14-39, 42-43, wherein component (a) and component (b) comprise compositions of component (a) and component (b).

**45.** The two-component herbicide of any one of claims 1-13, 40-41, or a method of any one of claims 14-39, 42-43, wherein component (a) and component (b) comprise a composition comprising a combination of component (a) and component (b).

**46.** Compositions of any one of claims 44-45 further comprising at least one herbicide safener selected from the group consisting of Daimuron (Dymron), Cumyluron ; Dimepiperate; Fenclorim; Cloquintocet (Cloquintocet-mexyl); Fenchlorazole-ethyl; Mefenpyr (Mefenpyr-diethyl); Isoxadifen (Isoxadifen-ethyl); Cyprosulfamide; Dietholate; Benoxacor; BPCMS; Cyometrinil; Dichlormid; Dicyclonon; Dietholate; fenchlorazole; Flurazole; Fluxofenim; Furilazole; Jiecaowan; Jiecaoxi; Mephenate; Metcamifen; Naphthalic anhydride; and Oxabetrinil.

**47.** The two-component herbicide of claim 41, the method of any one of claims 42-43 or compositions of claim 46, wherein the safener is selected from the group consisting of Cloquintocet; Isoxadifen; Mefenpyr and all effective combinations thereof, preferably selected from Cloquintocet mexyl; Isoxadifen-ethyl; and Mefenpyr-diethyl.

**48.** Compositions of any one of claims 44-45 further comprising additive comprising at least one of carrier, safener, adjuvant, surfactant, pH modifying ingredient, base or acid, formulation aid or combinations of several or all thereof.

**49.** A combination comprising Halauxifen, Aminopyralid, at least one base and at least one additive selected from carrier, safener, adjuvant, surfactants, pH modifying ingredient, formulation aids or combinations thereof.

**50.** A combination comprising Halauxifen preferably, Halauxifen-methyl), and

a. Clopyralid, or
b. Aminopyralid, or
c. Picloram, or
d. Quinclorac, or
e. Tribenuron,

in combination with a safener, preferably selected from Cloquintocet, Mefenpyr, and Isoxadifen, more preferably selected from Cloquintocet-mexyl; Isoxadifen-ethyl; and Mefenpyr-diethyl.

**51.** Compositions of any one of claims 44-45, wherein the content of active ingredients in said composition comprise a percentage of between X - Y, wherein

i. X is selected from the group consisting of, about 0.1%; 0.5%; 1%; 1.5%; 2%; 2.5%; 3%; 3.5%; 4%; 4.5%; 5%, and
ii. Y is selected from the group consisting of, about 90%; 93%; 94%; 95%; 97%; 98%; and 99%,

based on the total weight of the composition.

Europäisches Patentamt
European Patent Office
Office européen des brevets

# EUROPEAN SEARCH REPORT

Application Number
EP 20 20 3919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/029518 A2 (DOW AGROSCIENCES LLC [US]; SATCHIVI NORBERT [US] ET AL.) 5 March 2009 (2009-03-05)<br>* claims 1-11 *<br>* examples with compound A *<br>* formulations comprising halauxifen, aminopyralid, including base and additive (CAS-RN 1123188-39-5, 1123188-45-3, 1123188-47-5, 1123188-49-7) *<br>* tables 52,57,59,61 *<br>----- | 1-15, 19-21, 30,31, 38-51 | INV.<br>A01N43/40<br>A01P13/02<br>A01N33/18<br>A01N33/22<br>A01N35/10<br>A01N37/48<br>A01N43/10<br>A01N43/42<br>A01N43/50<br>A01N43/54<br>A01N43/56<br>A01N43/60<br>A01N43/90<br>A01N47/36<br>A01N47/38<br>A01N57/20 |
| X | WO 2007/082098 A2 (DOW AGROSCIENCES LLC [US]) 19 July 2007 (2007-07-19)<br>* tables 6,7 *<br>* page 14, paragraph 1 *<br>----- | 1-15, 25-31, 38-48, 50,51 | |
| X | WO 2015/089247 A1 (DOW AGROSCIENCES LLC [US]) 18 June 2015 (2015-06-18)<br>* claims 24,25,30 *<br>----- | 1-15, 25-30, 41-48, 50,51 | TECHNICAL FIELDS SEARCHED (IPC)<br>A01N |
| X | WO 2017/116514 A1 (DOW AGROSCIENCES LLC [US]) 6 July 2017 (2017-07-06)<br>* claims 1-29, esp. 11,13,14,17 *<br>* tables 1,2 *<br>----- | 1-15, 25-30, 38-48 | |
| X | WO 2014/116910 A1 (DOW AGROSCIENCES LLC [US]) 31 July 2014 (2014-07-31)<br>* claims 1-39 *<br>* tables 3-12 *<br>-----<br>-/-- | 1-15, 22-31, 38-48 | |

The present search report has been drawn up for all claims

1

| Place of search | Date of completion of the search | Examiner |
|---|---|---|
| Munich | 17 March 2021 | Marie, Gérald |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches Patentamt
European Patent Office
Office européen des brevets

# EUROPEAN SEARCH REPORT

Application Number
EP 20 20 3919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/116919 A1 (DOW AGROSCIENCES LLC [US]) 31 July 2014 (2014-07-31)<br>* claims 1-17 *<br>* table 1 *<br>----- | 1-15, 25-31, 38-48,50 | |
| X | WO 2017/100091 A1 (DOW AGROSCIENCES LLC [US]) 15 June 2017 (2017-06-15)<br>* claims 1-47 *<br>* example 1 *<br>----- | 1-15, 19-21, 25-31, 38-48 | |
| X | CN 107 455 381 A (BEIJING KEFA WEIYE PESTICIDE TECH CT) 12 December 2017 (2017-12-12)<br>* abstract; claims 1-5 *<br>* paragraph [0012] *<br>----- | 1-15, 19-21, 25-31, 38-48 | |
| X | WO 2017/214132 A1 (DOW AGROSCIENCES LLC [US]) 14 December 2017 (2017-12-14)<br>* claims 1-55 *<br>* examples *<br>----- | 1-15,30, 31, 38-48, 50,51 | TECHNICAL FIELDS SEARCHED (IPC) |
| X | CN 105 580 810 A (INST PLANT PROT SHANDONG ACADEMY AGRICULTURAL SCIENCES) 18 May 2016 (2016-05-18)<br>* abstract *<br>* claims 1-6 *<br>-----<br>-/-- | 1-15, 19-21, 30,31, 38-48 | |

The present search report has been drawn up for all claims

1

| Place of search | Date of completion of the search | Examiner |
|---|---|---|
| Munich | 17 March 2021 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 20 3919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 325 431 A (GUANGDONG ZHONGXUN AGRI TECH) 17 February 2016 (2016-02-17)<br>* abstract *<br>* claims 1-6 *<br>----- | 1-15, 19-21, 30,31, 38-48 | |
| X | CN 105 284 856 A (GUANGDONG ZHONGXUN AGRI TECH) 3 February 2016 (2016-02-03)<br>* abstract *<br>* claims 1-5 *<br>----- | 1-15, 19-21, 30,31, 38-48 | |
| X | CN 104 170 830 A (UNILINB CROP TECHNOLOGY CO LTD) 3 December 2014 (2014-12-03)<br>* abstract *<br>* claims 1-10 *<br>* table 1 *<br>----- | 1-15,30, 31,38-48 | |
| X | CN 104 145 982 A (UNILINB CROP TECHNOLOGY CO LTD) 19 November 2014 (2014-11-19)<br>* abstract *<br>* claims 1-10 *<br>----- | 1-15, 19-21, 30,31, 38-48 | TECHNICAL FIELDS SEARCHED (IPC) |
| X | WO 2011/144683 A1 (BAYER CROPSCIENCE AG [DE]; HACKER ERWIN [DE] ET AL.) 24 November 2011 (2011-11-24)<br>* claims 1-15 *<br>* synergistic mixture of glufosinate ammonium, halauxifen-(methyl) and one of metazachlor / clopyralid / quinmerac / imazamox / clethodim / quizalofop-P / saflufenacil *<br>* examples, in particular ternary mixture with metazachlor (CAS-RN 1350715-69-3) *<br>-----<br>-/-- | 1-18,30, 31,38-48 | |

The present search report has been drawn up for all claims

1

| Place of search | Date of completion of the search | Examiner |
|---|---|---|
| Munich | 17 March 2021 | Marie, Gérald |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 3 of 4

Europäisches Patentamt
European Patent Office
Office européen des brevets

# EUROPEAN SEARCH REPORT

Application Number
EP 20 20 3919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/096926 A1 (DOW AGROSCIENCES LLC [US]) 14 May 2020 (2020-05-14)<br>* examples 43,48 *<br>* formulations comprising halauxifen, aminopyralid, a base and an additive *<br>----- | 1-15, 40-51 | |
| X | WO 2011/044022 A1 (DOW AGROSCIENCES LLC; KEENEY FRANKLIN [US]; LI MEI [US]) 14 April 2011 (2011-04-14)<br>* page 9, last paragraph - page 10, paragraph 1 *<br>* examples 3,4 *<br>----- | 1-13, 40-51 | |
| E | WO 2021/030856 A1 (ADAMA AUSTRALIA PTY LTD [AU]) 25 February 2021 (2021-02-25)<br>* claims 1-19 *<br>* page 37; examples 15,16 *<br>----- | 1-51 | |
| | | | TECHNICAL FIELDS SEARCHED (IPC) |

1

The present search report has been drawn up for all claims

| Place of search | Date of completion of the search | Examiner |
|---|---|---|
| Munich | 17 March 2021 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 4 of 4

## ANNEX TO THE EUROPEAN SEARCH REPORT ON EUROPEAN PATENT APPLICATION NO.

EP 20 20 3919

This annex lists the patent family members relating to the patent documents cited in the above-mentioned European search report. The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| WO 2009029518 A2 | 05-03-2009 | AR 068617 A1 | 25-11-2009 |
| | | AU 2008293698 A1 | 05-03-2009 |
| | | BR PI0816172 A2 | 07-10-2014 |
| | | BR 122016001337 B1 | 09-10-2018 |
| | | BR 122016022104 B1 | 19-03-2019 |
| | | BR 122016022108 B1 | 26-06-2018 |
| | | CA 2693519 A1 | 05-03-2009 |
| | | CA 2873516 A1 | 05-03-2009 |
| | | CN 101808520 A | 18-08-2010 |
| | | CN 103931619 A | 23-07-2014 |
| | | CN 105052938 A | 18-11-2015 |
| | | DK 2180790 T3 | 10-02-2014 |
| | | DK 2514312 T3 | 19-10-2015 |
| | | DK 2514313 T3 | 26-05-2015 |
| | | DK 2514314 T3 | 05-09-2016 |
| | | EA 201070319 A1 | 30-12-2010 |
| | | EP 2180790 A2 | 05-05-2010 |
| | | EP 2514312 A2 | 24-10-2012 |
| | | EP 2514313 A1 | 24-10-2012 |
| | | EP 2514314 A1 | 24-10-2012 |
| | | EP 2580963 A1 | 17-04-2013 |
| | | EP 2926661 A1 | 07-10-2015 |
| | | ES 2447874 T3 | 13-03-2014 |
| | | ES 2534670 T3 | 27-04-2015 |
| | | ES 2542749 T3 | 11-08-2015 |
| | | ES 2588779 T3 | 04-11-2016 |
| | | HK 1177105 A1 | 16-08-2013 |
| | | HK 1177106 A1 | 16-08-2013 |
| | | HU E025012 T2 | 28-04-2016 |
| | | HU E026459 T2 | 30-05-2016 |
| | | HU E029581 T2 | 28-03-2017 |
| | | IL 203950 A | 30-06-2015 |
| | | JP 5214732 B2 | 19-06-2013 |
| | | JP 2010537996 A | 09-12-2010 |
| | | KR 20100034769 A | 01-04-2010 |
| | | MX 340409 B | 06-07-2016 |
| | | MX 349637 B | 07-08-2017 |
| | | MX 349638 B | 07-08-2017 |
| | | PL 2180790 T3 | 30-04-2014 |
| | | PL 2514312 T3 | 30-11-2015 |
| | | PL 2514313 T3 | 31-07-2015 |
| | | PL 2514314 T3 | 31-08-2017 |
| | | PT 2180790 E | 26-12-2013 |
| | | PT 2514312 E | 17-09-2015 |
| | | PT 2514313 E | 16-04-2015 |
| | | PT 2514314 T | 14-07-2016 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 20 20 3919

This annex lists the patent family members relating to the patent documents cited in the above-mentioned European search report. The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| | | UA 94351 C2 | 26-04-2011 |
| | | US 2009062121 A1 | 05-03-2009 |
| | | US 2015126367 A1 | 07-05-2015 |
| | | US 2015175543 A1 | 25-06-2015 |
| | | US 2018022703 A1 | 25-01-2018 |
| | | WO 2009029518 A2 | 05-03-2009 |
| | | ZA 201000426 B | 30-03-2011 |
| WO 2007082098 A2 | 19-07-2007 | AR 059010 A1 | 05-03-2008 |
| | | AU 2007204825 A1 | 19-07-2007 |
| | | BR PI0706398 A2 | 22-03-2011 |
| | | BR 122015016965 B1 | 31-01-2017 |
| | | CA 2626103 A1 | 19-07-2007 |
| | | CN 101360713 A | 04-02-2009 |
| | | CN 102731381 A | 17-10-2012 |
| | | CN 102731382 A | 17-10-2012 |
| | | EP 1973881 A2 | 01-10-2008 |
| | | EP 2060566 A1 | 20-05-2009 |
| | | HK 1175455 A1 | 05-07-2013 |
| | | JP 5059779 B2 | 31-10-2012 |
| | | JP 5856909 B2 | 10-02-2016 |
| | | JP 5941245 B2 | 29-06-2016 |
| | | JP 2009519982 A | 21-05-2009 |
| | | JP 2010001300 A | 07-01-2010 |
| | | JP 2012229220 A | 22-11-2012 |
| | | JP 2016164142 A | 08-09-2016 |
| | | KR 20080053413 A | 12-06-2008 |
| | | KR 20080053529 A | 13-06-2008 |
| | | KR 20080057335 A | 24-06-2008 |
| | | MY 143535 A | 31-05-2011 |
| | | PL 1973881 T3 | 30-04-2010 |
| | | PL 2060566 T3 | 28-04-2017 |
| | | TW I396682 B | 21-05-2013 |
| | | US 2007179060 A1 | 02-08-2007 |
| | | US 2008045734 A1 | 21-02-2008 |
| | | US 2008051596 A1 | 28-02-2008 |
| | | WO 2007082098 A2 | 19-07-2007 |
| WO 2015089247 A1 | 18-06-2015 | AR 098748 A1 | 08-06-2016 |
| | | AU 2014362326 A1 | 09-06-2016 |
| | | AU 2017248533 A1 | 09-11-2017 |
| | | BR 102014031235 A2 | 14-07-2015 |
| | | CA 2931336 A1 | 18-06-2015 |
| | | CL 2016001403 A1 | 20-01-2017 |
| | | CL 2018003567 A1 | 01-02-2019 |
| | | CN 105813460 A | 27-07-2016 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 20 20 3919

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| | | EP 3079473 A1 | 19-10-2016 |
| | | JP 2016539998 A | 22-12-2016 |
| | | JP 2020079258 A | 28-05-2020 |
| | | KR 20160096157 A | 12-08-2016 |
| | | NZ 720294 A | 26-05-2017 |
| | | PH 12016501020 A1 | 04-07-2016 |
| | | PT 3079473 T | 05-01-2021 |
| | | RU 2668097 C1 | 26-09-2018 |
| | | TW 201605347 A | 16-02-2016 |
| | | US 2015164075 A1 | 18-06-2015 |
| | | UY 35881 A | 31-07-2015 |
| | | WO 2015089247 A1 | 18-06-2015 |
| WO 2017116514 A1 | 06-07-2017 | AR 106288 A1 | 03-01-2018 |
| | | AU 2016380701 A1 | 26-07-2018 |
| | | AU 2019275636 A1 | 02-01-2020 |
| | | BR 102016020850 A2 | 04-07-2017 |
| | | CA 3009629 A1 | 06-07-2017 |
| | | CN 108430221 A | 21-08-2018 |
| | | CO 2018007228 A2 | 19-07-2018 |
| | | EP 3397059 A1 | 07-11-2018 |
| | | JP 2019500378 A | 10-01-2019 |
| | | KR 20180097637 A | 31-08-2018 |
| | | RU 2018125635 A | 30-01-2020 |
| | | TW 201722278 A | 01-07-2017 |
| | | US 2017181431 A1 | 29-06-2017 |
| | | US 2019008149 A1 | 10-01-2019 |
| | | UY 36895 A | 31-07-2017 |
| | | WO 2017116514 A1 | 06-07-2017 |
| WO 2014116910 A1 | 31-07-2014 | AR 094574 A1 | 12-08-2015 |
| | | AU 2014209294 A1 | 30-07-2015 |
| | | BR 102014001759 A2 | 25-08-2015 |
| | | BR 122019019608 B1 | 18-02-2020 |
| | | BR 122019019612 B1 | 03-03-2020 |
| | | CA 2898356 A1 | 31-07-2014 |
| | | CL 2015002079 A1 | 27-11-2015 |
| | | CN 105072908 A | 18-11-2015 |
| | | DK 2947987 T3 | 03-12-2018 |
| | | EP 2947987 A1 | 02-12-2015 |
| | | ES 2694435 T3 | 20-12-2018 |
| | | HU E041432 T2 | 28-05-2019 |
| | | IL 240016 A | 31-12-2017 |
| | | JP 6633914 B2 | 22-01-2020 |
| | | JP 2016504421 A | 12-02-2016 |
| | | JP 2018141001 A | 13-09-2018 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 20 20 3919

This annex lists the patent family members relating to the patent documents cited in the above-mentioned European search report. The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| | | KR 20150110674 A | 02-10-2015 |
| | | LT 2947987 T | 10-10-2018 |
| | | NZ 710014 A | 29-09-2017 |
| | | PH 12015501645 A1 | 19-10-2015 |
| | | PL 2947987 T3 | 31-01-2019 |
| | | RU 2015135808 A | 02-03-2017 |
| | | TW 201431492 A | 16-08-2014 |
| | | US 2014213446 A1 | 31-07-2014 |
| | | UY 35280 A | 29-08-2014 |
| | | WO 2014116910 A1 | 31-07-2014 |
| | | ZA 201505117 B | 21-12-2016 |
| WO 2014116919 A1 | 31-07-2014 | AR 094572 A1 | 12-08-2015 |
| | | AU 2014209303 A1 | 23-07-2015 |
| | | BR 102014001857 A2 | 25-08-2015 |
| | | CA 2897478 A1 | 31-07-2014 |
| | | CL 2015002077 A1 | 27-11-2015 |
| | | CN 104955329 A | 30-09-2015 |
| | | DK 2947986 T3 | 03-12-2018 |
| | | EP 2947986 A1 | 02-12-2015 |
| | | ES 2687895 T3 | 29-10-2018 |
| | | HR P20181529 T1 | 16-11-2018 |
| | | HU E038816 T2 | 28-11-2018 |
| | | IL 240017 A | 30-06-2020 |
| | | LT 2947986 T | 10-10-2018 |
| | | NZ 709705 A | 22-12-2017 |
| | | PH 12015501644 A1 | 12-10-2015 |
| | | PL 2947986 T3 | 28-02-2019 |
| | | RU 2015135785 A | 02-03-2017 |
| | | SI 2947986 T1 | 28-02-2019 |
| | | TW 201431493 A | 16-08-2014 |
| | | UA 116460 C2 | 26-03-2018 |
| | | US 2014213452 A1 | 31-07-2014 |
| | | UY 35283 A | 29-08-2014 |
| | | WO 2014116919 A1 | 31-07-2014 |
| | | ZA 201504913 B | 28-11-2018 |
| WO 2017100091 A1 | 15-06-2017 | AR 107019 A1 | 14-03-2018 |
| | | AU 2016368758 A1 | 05-07-2018 |
| | | AU 2019272035 A1 | 19-12-2019 |
| | | CA 3007628 A1 | 15-06-2017 |
| | | CN 108471751 A | 31-08-2018 |
| | | CO 2018006883 A2 | 10-07-2018 |
| | | EP 3386306 A1 | 17-10-2018 |
| | | JP 6830487 B2 | 17-02-2021 |
| | | JP 2019501894 A | 24-01-2019 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 20 20 3919

This annex lists the patent family members relating to the patent documents cited in the above-mentioned European search report. The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| | | KR 20180086253 A | 30-07-2018 |
| | | NZ 743573 A | 26-07-2019 |
| | | RU 2018123862 A | 10-01-2020 |
| | | TW 201725986 A | 01-08-2017 |
| | | US 2017156324 A1 | 08-06-2017 |
| | | UY 37010 A | 31-07-2017 |
| | | WO 2017100091 A1 | 15-06-2017 |
| CN 107455381 A | 12-12-2017 | NONE | |
| WO 2017214132 A1 | 14-12-2017 | AR 108788 A1 | 26-09-2018 |
| | | AU 2017278355 A1 | 13-12-2018 |
| | | BR 102017012391 A2 | 19-12-2017 |
| | | CA 3026635 A1 | 14-12-2017 |
| | | CN 109561683 A | 02-04-2019 |
| | | EP 3468366 A1 | 17-04-2019 |
| | | RU 2019100024 A | 10-07-2020 |
| | | US 2017354148 A1 | 14-12-2017 |
| | | UY 37284 A | 31-01-2018 |
| | | WO 2017214132 A1 | 14-12-2017 |
| CN 105580810 A | 18-05-2016 | NONE | |
| CN 105325431 A | 17-02-2016 | NONE | |
| CN 105284856 A | 03-02-2016 | NONE | |
| CN 104170830 A | 03-12-2014 | NONE | |
| CN 104145982 A | 19-11-2014 | NONE | |
| WO 2011144683 A1 | 24-11-2011 | AU 2011254589 A1 | 06-12-2012 |
| | | CA 2799690 A1 | 24-11-2011 |
| | | CN 103002743 A | 27-03-2013 |
| | | EP 2571363 A1 | 27-03-2013 |
| | | US 2011287933 A1 | 24-11-2011 |
| | | WO 2011144683 A1 | 24-11-2011 |
| WO 2020096926 A1 | 14-05-2020 | UY 38460 A | 30-06-2020 |
| | | WO 2020096926 A1 | 14-05-2020 |
| WO 2011044022 A1 | 14-04-2011 | AR 079412 A1 | 25-01-2012 |
| | | AU 2010305693 A8 | 03-05-2012 |
| | | CA 2775783 A1 | 14-04-2011 |
| | | CL 2012000871 A1 | 19-10-2012 |
| | | CN 102711453 A | 03-10-2012 |

EPO FORM P0459

For more details about this annex : see Official Journal of the European Patent Office, No. 12/82

page 5 of 6

**ANNEX TO THE EUROPEAN SEARCH REPORT ON EUROPEAN PATENT APPLICATION NO.** EP 20 20 3919

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2021

| Patent document cited in search report | Publication date | Patent family member(s) | Publication date |
|---|---|---|---|
| | | DK 2485586 T3 | 17-12-2018 |
| | | EA 201270523 A1 | 30-10-2012 |
| | | EP 2485586 A1 | 15-08-2012 |
| | | ES 2688230 T3 | 31-10-2018 |
| | | GE P20156268 B | 14-04-2015 |
| | | HR P20181528 T1 | 16-11-2018 |
| | | HU E040163 T2 | 28-02-2019 |
| | | LT 2485586 T | 10-10-2018 |
| | | NZ 599015 A | 28-02-2014 |
| | | PL 2485586 T3 | 29-03-2019 |
| | | PT 2485586 T | 06-12-2018 |
| | | SI 2485586 T1 | 31-12-2018 |
| | | UA 109416 C2 | 25-08-2015 |
| | | US 2011082039 A1 | 07-04-2011 |
| | | WO 2011044022 A1 | 14-04-2011 |
| | | ZA 201202381 B | 27-08-2014 |
| WO 2021030856 A1 | 25-02-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7314849 B
- US 20090062121 A
- US 8598084 B


### Non-patent literature cited in the description


- *Int. J. Agri. Biol.,* 2004, vol. 6 (1), 209-212
- **MARIA APARECIDA.** *Toxicity of Herbicides: Impact on Aquatic and Soil Biota and Human Health, http://dx.doi.org/10.5772/55851*
- Avaliação dos potenciais tóxicos, citotóxicos e genotóxicos de águas ambientais de Corumbá-MS em raízes de Allium cepa. **MORAES, D.S.L.** Tese (Mestrado em Genética e Melhoramento). Universidade Estadual de Londrina, 2000, 158 f
- Calculation of the synergistic and antagonistic responses of herbicide combinations. *journal Weeds,* 1967, vol. 15, 20-22
- **ZOBIOLE, L.H.S. et al.** Pyroxsulam: Sulfonamide Herbicide for Weed Control in Wheat in Brazil. *Planta Daninha,* vol. 36, e018155253
- McCutcheon's Detergents and Emulsifiers Annual. MC Publishing Corporation, 1998
- Encyclopedia of Surfactants. Chemical Publishing Company, 1980, vol. I-III